# EUROPEAN PATENT SPECIFICATION

(11) **EP 3 258 721 B1**
(45) Date of publication and mention of the grant of the patent: **03.05.2023**
(21) Application number: 15879760.5
(22) Date of filing: 30.12.2015
(51) Int. Cl.: H04W 24/00

(54) **SENDING A REFERENCE SIGNAL IN UNLICENSED BANDS**
SENDEN VON EINEM REFERENZSIGNAL IN UNLIZENSIERTEN BÄNDERN
ÉMISSION D'UN SIGNAL DE RÉFÉRENCE DANS DES BANDES NON COUVERTES PAR DES LICENCES

(30) Priority: 28.01.2015 CN 201510043776
(43) Date of publication of application: 20.12.2017
(73) Proprietor: China Mobile Communications Corporation, Beijing 100032 (CN)
(72) Inventor: KE, Ting, Beijing 100032 (CN); LIU, Jianjun, Beijing 100032 (CN); SHEN, Xiaodong, Beijing 100032 (CN); WANG, Rui, Beijing 100032 (CN); HOU, Xueying, Beijing 100032 (CN); WANG, Fei, Beijing 100032 (CN)
(74) Representative: Gevers Patents
(86) International application number: PCT/CN2015/099906
(87) International publication number: WO 2016/119562

(56) References cited:
- EP-A1- 3 200 516
- WO-A1-2012/040520
- WO-A1-2015/165011
- CN-A- 102 232 307
- CN-A- 104 301 273
- CN-A- 104 333 873
- US-A1- 2014 112 289
- NEC: "Impact of LBT regulation on LAA", 3GPP DRAFT; R1-144866, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. San Francisco, USA; 20141117 - 20141121 8 November 2014 (2014-11-08), XP050885532, Retrieved from the Internet: URL:http://www.3gpp.org/ftp/tsg_ran/WG1_RL 1/TSGR1_79/Docs/ [retrieved on 2014-11-08]
- ITL INC: "Discussion on Channel Access Mechanism based on LBT for LAA", 3GPP DRAFT; R1-145109, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. San Francisco, USA; 20141117 - 20141121 17 November 2014 (2014-11-17), XP050876141, Retrieved from the Internet: URL:http://www.3gpp.org/ftp/Meetings_3GPP_ SYNC/RAN1/Docs/ [retrieved on 2014-11-17]

## Description

### TECHNICAL FIELD

The disclosure relates to a Long Term Evolution (LTE) system, and in particular to a multiple transmission occasion-based Unlicensed Band (Uband) reference signal sending method, receiving method and eNB and user equipment.

### BACKGROUND

Licensed Bands (Lbands) are always a core asset of a mobile operating company, and are a foundation for providing high-quality radio communication services. However, along with vigorous development of the mobile Internet, a conflict between explosion of high-bandwidth service requirements of the public and scarcity of spectrum resources gets increasingly sharp. Ubands may provide richer spectrum resources and a larger development space as an effective supplement of the Lbands.

The Unlicensed LTE (LTE-U) technology implements effective aggregation of Ubands and Lbands, and thus is considered as a low-cost and high-efficiency capacity shunting solution capable of providing better service experiences for users and helping the mobile operating company to expand mobile broadband network capacity and the market space. The LTE-U technology is also a hotspot technology of the 3rd Generation Partnership Project (3GPP) Release 13 (13). In the 3GPP organization, the LTE-U technology is also called as a Licensed-Assisted Access using LTE (LAA) technology.

CN 104 301 273 A discloses a method by a eNB for transmitting (and receiving by a UE) a reference signal, RS, using an unlicensed carrier. In particular, a RS (CRS, PRS, CSI-RS or SRS) is transmitted from a first OFDM symbol after an unlicensed carrier is contended by a base station, BS. The BS selects an idle unlicensed carrier as a candidate unlicensed carrier to be preempted for use through a measurement or carrier selection mechanism. If the BS selects the unlicensed carrier to be preempted, then the BS may notify the UE of a frequency point, a bandwidth, etc. of the unlicensed carrier through a licensed carrier. The RS is transmitted at least in a complete subframe (e.g. a subframe next to a subframe corresponding to the time when the unlicensed carrier is contended by the BS). The RS may, alternatively, be transmitted periodically or for a predefined number of times from the subframe when the unlicensed carrier is contended by the BS.

US 2014/112289 A1 discloses a method for transmitting, by an eNB, a RS on an unlicensed band. The eNB performs carrier sensing on the unlicensed band. If available, it transmits a PDSCH on the unlicensed band immediately after the transmission of a preamble informing of the start point of the PDSCH and a reservation signal. The preamble enables a terminal to acquire reception synchronization for at least one of the reservation signal and the PDSCH.

Related technologies can also be found in EP 3200516 A1, published on 02.08.2017, after the priority claimed by the present application, which discloses a method for transmitting, by an eNB, a RS on an unlicensed band, U-Cell. The eNB performs carrier sensing (based on LBT) on the unlicensed band. If a carrier in the unlicensed band is available, the eNB performs scheduling on the U-Cell.

### SUMMARY

The technical problem to be solved by embodiments of the disclosure is to provide a Uband reference signal sending method, receiving method, eNB and user equipment, to ensure reliable reference signal measurement performance in Ubands.

The invention is defined in the claims. The features of the methods, Evolved Node B and User Equipment according to the present invention are defined in the independent claims, and the preferable features according to the present invention are defined in the dependent claims.

Compared with the prior art, the embodiments of the disclosure have the advantages that multiple solutions are proposed for a challenge of a Uband Listening Before Talk (LBT) mechanism for a reference signal transmission pattern, sending/receiving reliability of the Uband reference signal is improved, and reliable RRM measurement performance is ensured. Moreover, the embodiments of the disclosure provide a new Discovery Reference Signal (DRS) occasion transmission technology for a Uband LBT characteristic of LAA.

### BRIEF DESCRIPTION OF DRAWINGS

Fig. 1 is a flowchart of a Uband reference signal sending method according to an embodiment of the disclosure.
Fig. 2 is a schematic diagram of a possible Uband reference transmission occasion according to the invention.
Fig. 3 is a schematic diagram of an example of configuring multiple sets of transmission patterns in an eNB according to an embodiment of the disclosure.
Fig. 4a, 4b, 4c and 4d are schematic diagrams of a relationship between a Uband reference signal and a Measurement Gap boundary according to an embodiment of the disclosure.
Fig. 5 is a schematic diagram of competing for a channel resource at a certain intermediate sub-frame of a Measurement Gap by an eNB under a condition corresponding to Case3 in Fig. 3 according to an embodiment of the disclosure.
Fig. 6 is a schematic diagram of an example of a solution for adaptively regulating a transmission density of a Uband reference signal on the basis of a channel contention result and a transmission occasion according to an embodiment of the disclosure.
Fig. 7 is a schematic diagram of an example of a solution for adaptively regulating a transmission density of a Uband reference signal on the basis of an RRM measurement result fed back by UE according to an embodiment of the disclosure.
Fig. 8 is a flowchart of a Uband reference signal receiving method according to an embodiment of the disclosure.
Fig. 9 is another flowchart of a Uband reference signal receiving method according to an embodiment of the disclosure.
Fig. 10 is a structure diagram of a Uband reference signal sending device according to an embodiment of the disclosure.
Fig. 11 is a structure diagram of a Uband reference signal receiving device according to an embodiment of the disclosure.
Fig. 12 is another structure diagram of a Uband reference signal receiving device according to an embodiment of the disclosure.
Fig. 13 is a schematic diagram of sensing whether a candidate transmission position is idle or not according to an embodiment of the disclosure.

### DETAILED DESCRIPTION

In order to make the technical problem to be solved, technical solutions and advantages of the disclosure clearer, detailed descriptions will be made below with reference to the drawings and specific embodiments.

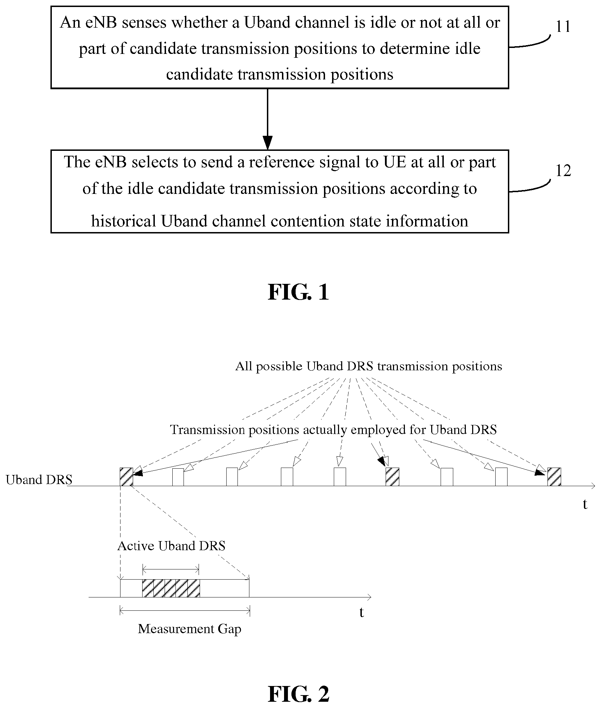

Embodiments of the invention are those described below with reference to Figure 1. Remaining embodiments, aspects and examples disclosed below are included for illustrative purposes and for facilitating the understanding of the invention.

In an embodiment of the disclosure, an licensed band (Lband, also referred to as licensed spectrum) LTE designing method is multiplexed for an unlicensed band (Uband, also referred to as unlicensed spectrum) reference signal as much as possible to reduce standardization complexity. Preliminarily, the reference signal may refer to the Discovery Reference Signal (DRS) in the 3GPP Release 12 (R12), where the DRS may be formed by, for example, N sub-frames (N≤5). Of course, it may also be a specification of a higher release, such as the DRS in the 3GPP R13, where the DRS may be formed by 12 Orthogonal Frequency Division Multiplexing (OFDM) symbols, and occupies first 12 OFDM symbols of a corresponding sub-frame.

In the embodiment of the disclosure, an LAA reference signal may refer to the abovementioned DRS, may be applied to Uband LAA Radio Resource Management (RRM) measurement, and may further be applied to cell identification. Specifically, a Frame Structure Type 3 may be applied to an LAA secondary cell according to a standard specification 3GPP TS 36.211. Therefore, the technical solutions of the disclosure may be applied to the Frame Structure Type 3. Of course, designing of a reference signal does not exclude of adoption of other technical solutions specified by standards.

An R12 DRS is a periodic signal, a period candidate set includes 40ms, 80ms and 160ms, and the DRS lasts for multiple sub-frames every time, such as N sub-frames (N≤5). The DRS includes a Primary Synchronization Signal/Secondary Synchronization Signal (PSS/SSS), multiple Cell-specific Reference Signals (CRSs) or Channel State Indication Reference Signal (CSI-RS) instances.

A Uband forcibly implements a listening before talk (LBT) mechanism, that is, an eNB is required to sense whether a Uband channel is idle or not before sending a reference signal on a Uband. The eNB is allowed to send the Uband reference signal only when the channel is idle, otherwise is required to wait a proper occasion. Therefore, the eNB may not obtain an occasion for sending the Uband reference signal because no channel is obtained by contention in a specified time range in the Uband.

In an Lband, a transmission occasion for an R12 DRS is determinate, and UE may achieve reliable RRM measurement performance. In a Uband, a transmission occasion for a Uband reference signal is indeterminate, so that an actual transmission occasion for the Uband reference signal may greatly influence RRM measurement performance of the UE on the Uband. If the same transmission occasion as the Lband DRS is tried to be obtained for the Uband reference signal and no transmission occasion may be obtained for the Uband reference signal within a configured measurement window due to channel contention, the RRM measurement performance of the UE on the Uband may be greatly deteriorated.

According to the embodiment of the disclosure, a transmission occasion for a reference signal in each reference signal sending period on a Uband is extended to improve sending/receiving reliability of the reference signal. In the embodiment of the disclosure, a Uband channel includes multiple predetermined candidate transmission positions for transmitting the reference signal. Specifically, each reference signal sending period include multiple candidate transmission opportunities. Here, each candidate transmission position is a transmission occasion for the reference signal, and is used to transmit the reference signal once. That is, a time length for which the reference signal is transmitted in a transmission occasion is less than or equal to a time length of the candidate transmission position. Specifically, in an embodiment, when the reference signal adopts a DRS in the 3GPP R13, a length of each candidate transmission position may be a sub-frame (1ms).

In the embodiment of the disclosure, a reference signal on a Uband may be designed with reference to a DRS on an Lband, or may be independently designed in another manner. According to a specific application scenario and requirement, a reference signal may be a certain single signal, or is a combined signal including multiple signals. For example, with reference to design of an Lband DRS, a time length of the reference signal on the Uband in the embodiment of the disclosure may be 1-5ms (i.e. 1-5 sub-frames), and the reference signal may specifically include at least one or combination of a PSS, an SSS, a CRS and a CSI-RS. Sending a reference signal once usually refers to sending all signals included by the reference signal. Of course, the reference signal may also refer to design of a DRS in the 3GPP R13. The DRS may be formed by 12 OFDM symbols, and occupy first 12 OFDM symbols of a corresponding sub-frame.

The embodiments of the disclosure will be described below from an eNB side and a UE side respectively.

### The network side (eNB)

For the abovementioned problem, an embodiment of the disclosure discloses a Uband reference signal sending method, which implements transmission of a Uband reference signal on the basis of multiple transmission opportunities and increases a reference signal sending success rate of an eNB. Referring to Fig. 1, the Uband reference signal sending method provided by the invention includes the following steps.

Step 11: an eNB senses whether a Uband channel is idle or not at all or part of candidate transmission positions, and determines idle candidate transmission positions.

Here, the Uband channel includes multiple predetermined candidate transmission positions for transmitting a reference signal, that is, a predetermined transmission period (such as 40ms, 80ms and 160ms) of the reference signal includes the multiple candidate transmission positions for the reference signal, and each candidate transmission position is a transmission occasion for the reference signal, so that the multiple candidate transmission positions may be used to transmit the reference signal for many times. One candidate transmission position may usually be used to transmit the reference signal once. The eNB and UE may predetermine the candidate transmission positions, or the eNB may notify the UE of the candidate transmission positions by signaling.

Here, the eNB senses whether the Uband channel is idle or not at all or part of the candidate transmission positions; or, the eNB may select to sense whether the Uband channel is idle or not at part of the candidate transmission positions according to historical Uband channel contention state information. The historical channel contention state information is information reflecting a Uband channel contention condition, such as an actual Uband reference signal sending density.

Step 12: the eNB selects to send the reference signal to UE at all or part of the idle candidate transmission positions according to historical Uband channel contention state information, where the LAA reference signal may be designed with reference to a DRS defined by the 3GPP R12.

After Step 12, the embodiment of the disclosure may further include the following step that: the eNB receives an RRM measurement result on an Lband sent by the UE on the basis of the reference signal.

In the embodiment of the disclosure, the UE is required to know about a specific position where the eNB may send the reference signal. Specifically, the eNB may notify the UE of information about the specific position where it may send the reference signal on a Uband.

In order to reduce signaling overhead for reaching an agreement, another preferred solution is that: the eNB and the UE predetermine all the candidate transmission positions in the predetermined transmission period of the reference signal.

According to the invention, the Uband channel includes multiple predetermined transmission positions for transmitting the reference signal, and the reference signal is sent at the transmission positions. In consideration of a condition that a certain transmission position may not be obtained due to contention, the reference signal may not be transmitted at part of the transmission positions. Here, each idle position may be used to send a predetermined reference signal once.

In Step 11, the eNB senses whether the candidate transmission positions on the Uband are idle or not, to judge whether the Uband channel is idle or not. In order to increase the reference signal sending success rate and implement effective RRM measurement, in Step 12 in the embodiment, the eNB adaptively regulates an expected sending density of the reference signal according to a Uband channel contention state, and when sensing the idle transmission positions, may send the reference signal to the UE through part or all of the idle transmission positions in the multiple transmission positions, to make the expected sending density of the reference signal when the Uband channel is idle not less than a first preset threshold value. The UE performs RRM measurement according to detected effective reference signals, and sends the measurement result to the eNB. Of course, considering that the channel may not be preempted, it is possible that the expected sending density is not equal to the actual sending density. According to the invention, the sending density is represented by a ratio of the number of sending times of the reference signal in a certain statistical period to a time length of the statistical period.

Description will be made below with a Uband DRS as an example. Fig. 2 is a schematic diagram of a possible Uband reference signal transmission occasion. As shown in Fig. 2, each Measurement Gap in Fig. 2 represents a transmission position. The eNB selects part of available opportunities from all possible candidate transmission positions for the Uband reference signal according to the Uband channel contention state, in order to actually send the Uband reference signal.

Before the Uband reference signal is actually transmitted, the eNB and the UE predetermine all the possible transmission positions for the Uband reference signal. The eNB configures all the possible transmission opportunities for the Uband reference signal as Measurement Gaps. The network side may also configure Measurement Gaps of the UE through Radio Resource Control (RRC) signaling. Measurement Gap configuration manners which may be adopted in the embodiment of the disclosure will be described below with examples. It is important to note that the following examples are only a plurality of configuration manners which may be adopted in the disclosure and not intended to specifically limit the disclosure.

A Measurement Gap configuration manner 1-1: the eNB configures single periodic Measurement Gaps, and a potential period of the Measurement Gaps is denser than that in a configuration embodiment 1-2. For example, the potential period of the Measurement Gaps is configured to be 40ms, that is, a Measurement Gap configuration period is a 1/N multiple of a predetermined reference signal transmission period (for example, 160ms). It should be understood that the Uband reference signal is not actually sent on all of the Measurement Gaps.

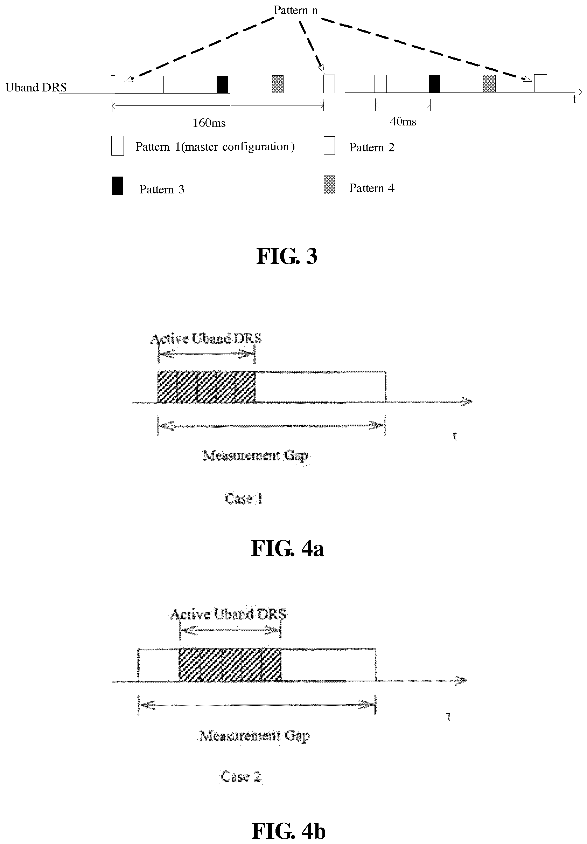

A Measurement Gap configuration manner 1-2: the eNB configures multiple sets of transmission patterns, as shown in Fig. 3, and starting sub-frames of Measurement Gap patterns of different transmission patterns have different offsets. The period configured for the Measurement Gap in each set of transmission pattern is equal to the predetermined reference signal transmission period.

In addition, a certain pattern may also be set to be a master configuration, i.e. a default master transmission pattern, and the other patterns are configured to be slave configurations, i.e. slave transmission patterns, so that different UE response patterns are set for different patterns. The eNB may configure the UE to try to receive the Uband reference signal on all the patterns in advance, or dynamically change master and slave pattern configurations of the UE through signaling in a running process.

The multiple sets of transmission patterns are configured in a Discovery Signal Measurement Timing Configuration (DMTC) window, and the length of each transmission position may properly equal to a sub-frame (1ms). If a size of the DMTC window is M sub-frames and the period is T ms, M sets of transmission patterns may be configured, and each set of transmission pattern consists of a series of periodic candidate transmission positions. Furthermore, the period of each set of transmission pattern is T ms, where the length of each candidate transmission position is 1 sub-frame, and each candidate transmission position falls within the DMTC window. Particularly, the transmission pattern including a first sub-frame in the DMTC window is called the master transmission pattern, and the transmission patterns including other sub-frames in the DMTC window are sequentially called a first slave transmission pattern, a second slave transmission pattern, ..., an (M-1)th slave transmission pattern.

In the embodiment of the disclosure, the eNB is required to sense an occupation state of the Uband channel, and if an expected transmission position for sending is in an idle state, the reference signal may be sent at the transmission position. Since a transmission position may include multiple sub-frames, if a channel corresponding to a current sub-frame of the transmission position is occupied, a channel corresponding to a next sub-frame of the transmission position may be continued to be sensed to judge whether the channel of the next sub-frame is idle or not.

In the embodiment of the disclosure, a time length for which the reference signal (the Uband reference signal) is sent once is usually less than or equal to the time length of the candidate transmission position. Therefore, the operation that the eNB senses whether a certain candidate transmission position on the Uband channel is idle or not in Step 11 specifically includes that: the eNB starts to sense whether the candidate transmission position is idle or not at a predetermined advance value ahead of a starting sub-frame of the candidate transmission position, or, the eNB starts to sense whether the candidate transmission position is idle or not at the predetermined advance value ahead of an intermediate sub-frame of the transmission position. At this time, in Step 12, when the reference signal is sent at a certain idle candidate transmission position, if an ending sub-frame of the reference signal is about to exceed an ending boundary of the idle candidate transmission position, the reference signal may be stopped to be sent after the ending boundary of the idle candidate transmission position is reached; or, the reference signal is continuously sent until the reference signal is completely sent.

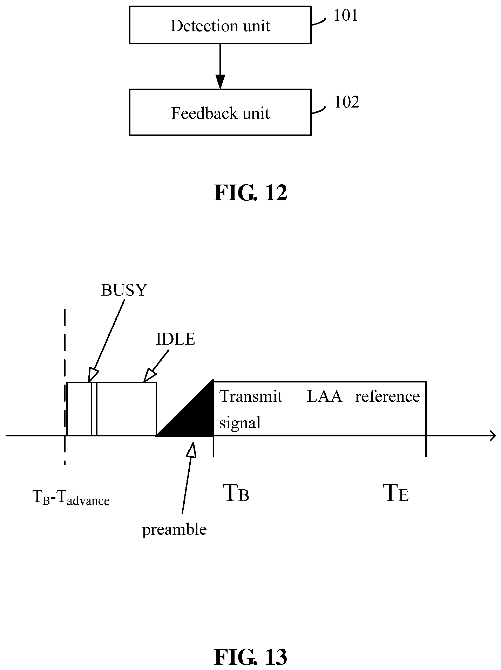

Specifically, Fig. 13 may be referred to for how to judge whether the channel is idle or not. Fig. 13 shows a certain candidate transmission position. During sensation, it is usually necessary to set an advance value, that is, sensation is started before the transmission position is started. The operation that whether the candidate transmission position is idle or not is started to be sensed at the predetermined advance value ahead of the starting sub-frame of the transmission position is implemented as follows: if times of the starting sub-frame and ending sub-frame of the candidate transmission position are T_{B} and T_{B} respectively, the eNB starts sensing a busy/idle state of the Uband channel at time of T_{B}-T_{advance}: if it is sensed that a total power level on the Uband channel is kept less than a predetermined threshold within a preset duration, the candidate transmission position is judged to be idle, otherwise the candidate transmission position is judged to be busy.

Therefore, when the reference signal is sent at an idle candidate transmission position, if a current time does not reach a rated sending time of the starting sub-frame of the reference signal, the eNB may send a preamble signal to forcibly occupy the Uband channel until the rated sending time of the starting sub-frame of the reference signal is reached, and then starts sending the reference signal. Of course, the eNB may also design a length T_{advance} of the advance value for idleness sensation in advance to make the starting sub-frame of the reference signal reached immediately after sensation is ended, and then may immediately send the reference signal if an sensation result is idle.

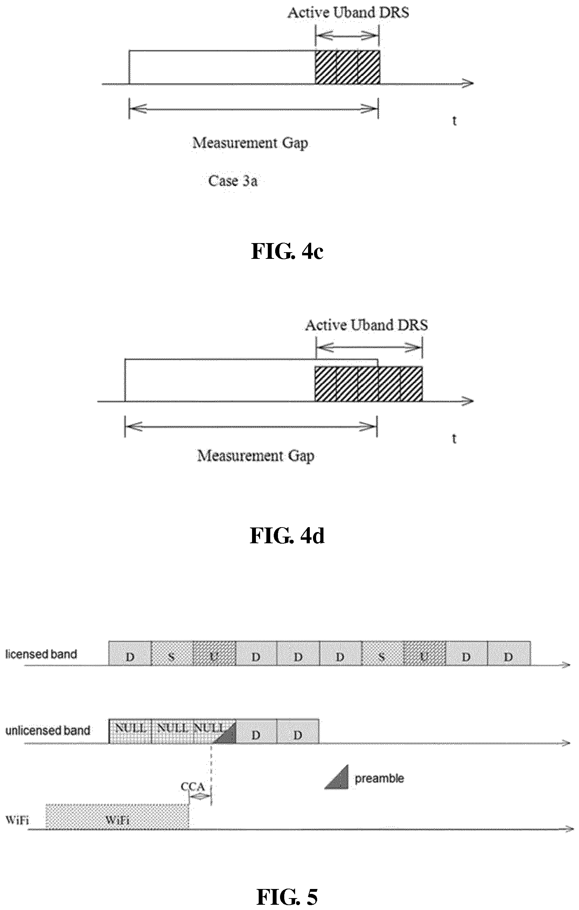

For example, in Fig. 2, the UE may be expected to receive the Uband reference signal on the configured Measurement Gaps. It is generally recognized that a maximum signal length (e.g., 5ms) of a Uband reference signal is less than or equal to a length (e.g., 6ms) of a Measurement Gap window. According to a channel contention result, the eNB may start transmitting the Uband reference signal at a position of the starting sub-frame of the Measurement Gap (see Case1 shown in Fig. 4a), or may start transmitting the Uband reference signal at a certain intermediate sub-frame of the Measurement Gap (see Case2 in Fig. 4b, Case3a in Fig. 4c and Case3b in Fig. 4d).

Here, the eNB starts transmitting the Uband reference signal at a certain intermediate sub-frame of the Measurement Gap because the eNB may get a channel resource with contention only at the certain intermediate sub-frame of the Measurement Gap.

According to the above description, if the ending sub-frame of the Uband reference signal exceeds a boundary of a Measurement Gap, the eNB and the UE may select one of the following two transmission manners according to understanding of a length of the Uband reference signal transmitted in the Measurement Gap.

Transmission manner 2-1: the eNB only transmits a part of the Uband reference signal within a range of the Measurement Gap, and does not transmit an exceeding part (see Case3a in Fig. 4c).

Transmission manner 2-2: no matter whether the Uband reference signal exceeds the boundary of the Measurement Gap or not, the eNB transmits the complete Uband reference signal (see Case3b in Fig. 4d). Fig. 5 further shows a schematic diagram of sending a reference signal after an eNB gets a channel resource with contention at a certain intermediate sub-frame of a Measurement Gap, which corresponds to Case3a in Fig. 4c or Case3b in Fig. 4d.

In the embodiment of the disclosure, the eNB and the UE may predetermine or reach an agreement about the abovementioned implementation manners through signaling, so that both the parties perform signal sending and receiving processing and the like according to the predetermined implementation manner.

In the embodiment of the disclosure, in order to ensure the sending success rate of the Uband reference signal, the eNB may adaptively regulate the expected sending density of the Uband reference signal according to the channel contention result in Step 12. In the embodiment of the disclosure, the expected sending density of the Uband reference signal may be regulated on the basis of the channel contention result and the transmission position (a first adaptive regulation principle), or the expected sending density of the Uband reference signal may be regulated on the basis of the RRM measurement result fed back by the UE (a second adaptive regulation principle). Based on different principles according to which the eNB regulates the expected sending density of the Uband reference signal, multiple adaptive regulation implementation manners are provided in the embodiment of the disclosure respectively, and will be described below respectively.

The first adaptive regulation principle Opt 1A-1: the expected sending density of the Uband reference signal is regulated on the basis of the channel contention result and the candidate transmission position.

Under such a principle, the Uband includes multiple candidate transmission positions, where each of gaps between adjacent candidate transmission positions is equal to a first period (for example, 40ms), the multiple candidate transmission positions include multiple default transmission positions (such as 160ms), each of gaps between adjacent default transmission positions is equal to a second period, and the second period is greater than or equal to the first period.

Then, the operation that the eNB sends the reference signal to the UE through part or all of the idle candidate transmission positions in the multiple candidate transmission positions in Step 12 is specifically implemented as follows:
Step 121: if the eNB successfully preempts a current default transmission position, the reference signal is sent to the UE through the current default transmission position; and
Step 122: if the default transmission position is not preempted, the eNB tries to preempt any candidate transmission position before a next default transmission position, and after a certain candidate transmission position (called as a first transmission position hereinafter for short) is preempted, the reference signal is sent through the first transmission position.

According to Steps 121-122, the eNB sends the reference signal through the default transmission position, tries to transmit the reference signal at another candidate transmission position except the default transmission position if the default transmission position is busy, sends the reference signal once at the candidate transmission position if preempting the other candidate transmission position, and if still not preempting the other candidate transmission position when a next default transmission position is reached, continues trying to preempt the currently reached default transmission position for transmission of the reference signal. In such a manner, the reference signal is always preferentially sent at the preset default transmission position, and only when a certain default transmission position is not preempted, is tried to be sent at a subsequent nondefault transmission position to ensure a certain sending density.

Of course, the default transmission positions may also be adaptively modified according to a specific condition. For example, in Step 122, after the first transmission position is preempted, the default transmission positions may be reset, that is, the original transmission positions are canceled, and the candidate transmission positions at gaps which are integer multiples of the second period with the first transmission position after the first transmission position are set to be the default transmission positions. In such a manner, sending through the newly set default transmission positions will be tried subsequently.

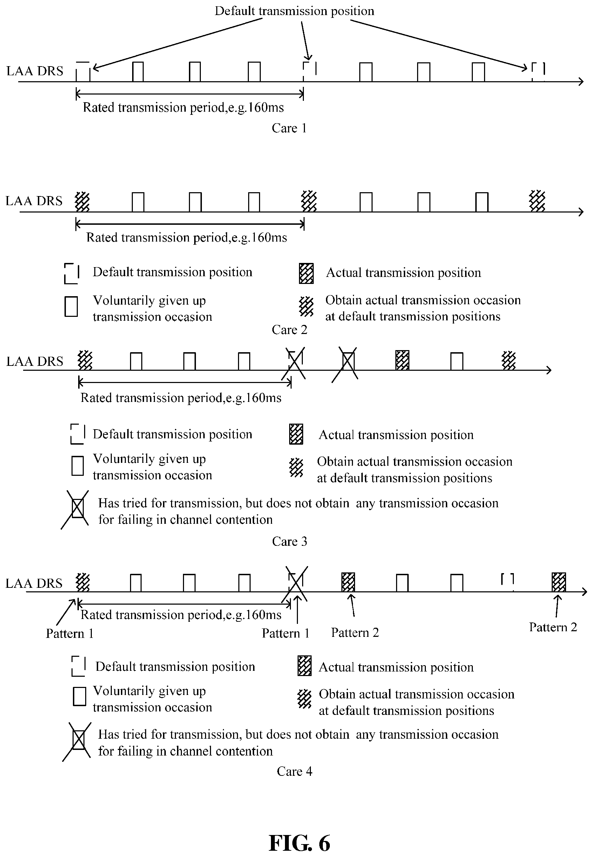

For example, in the abovementioned Measurement Gap configuration manner 1-1, the eNB may configure a rated transmission period, such as 160ms (see Case1 in Fig. 6), for the Uband reference signal at first, configures all possible candidate transmission positions, such as the Measurement Gap of the 40ms period in the abovementioned Measurement Gap configuration manner 1-1, multistage Measurement Gap pattern in the abovementioned Measurement Gap configuration manner 1-2, or may configure the default transmission positions. The default transmission positions may be candidate transmission positions which are spaced from one another by an integer multiple of the rated transmission period.

When any embodiment is adopted, if the eNB may smoothly preempt the Uband channel all the time, the Uband reference signal is sent at the default candidate transmission positions with the rated transmission period (see Case2 in Fig. 6 for a specific sending diagram). Otherwise, if contention for the channel fails at a certain default transmission position, the Uband reference signal is tried to be sent at multiple subsequent candidate transmission positions until contention for the channel succeeds, so as to keep the transmission period of the Uband reference signal as stable as possible.

Once the eNB gets the channel at a candidate transmission position other than the default transmission positions with contention, the eNB has two choices.

Embodiment 3-1: the eNB continues sending a next Uband reference signal at the original default transmission positions next time, so that a time interval between a time when the Uband reference signal is successfully transmitted this time and a time the Uband reference signal is tried to be sent next time is less than the rated transmission period. Particularly, if the single periodic Measurement Gap solution in the abovementioned Measurement Gap configuration manner 1-1 is adopted, the embodiment 3-1 may be preferred (see Case3 in Fig. 6 for a specific sending diagram).

Embodiment 3-2: the eNB modifies the subsequent default transmission positions, and determines a current candidate transmission position at which contention for the channel succeeds as a starting point of the subsequent default transmission position. Therefore, the time interval between the time when the Uband reference signal is successfully transmitted this time and the time the Uband reference signal is tried to be sent next time is equal to the rated transmission period.

According to an abovementioned implementation, each candidate transmission position on the Uband may belong to multiple sets of transmission patterns, each of gaps between adjacent candidate transmission positions in each set of transmission pattern is equal to the second period (for example, the rated transmission period), and the multiple sets of transmission patterns include a set of master transmission pattern and more than one set of slave transmission modes. At this time, the operation that the eNB sends the reference signal to the UE through part or all of the idle candidate transmission positions in the multiple candidate transmission positions in Step 12 may specifically include that:
the eNB tries to preempt a candidate transmission position in the master transmission pattern ,to send the reference signal to the UE,
where if a current candidate transmission position in the master transmission pattern is successfully preempted, the reference signal is sent to the UE through the current candidate transmission position; and
if the current candidate transmission position in the master transmission pattern is not preempted, the eNB tries to preempt a candidate transmission position of each slave transmission pattern before a next candidate transmission position in the master transmission pattern is reached, and after a candidate transmission position of any slave transmission pattern is preempted, the reference signal may be sent through the candidate transmission position.

According to the above steps, the eNB sends the reference signal through the master transmission pattern, and if not successfully preempting a certain candidate transmission position in the master transmission pattern due to a busy state of the candidate transmission position, the eNB tries to transmit the reference signal at the candidate transmission positions of each slave transmission pattern, if preempting a candidate transmission position of a certain slave transmission pattern, sends the reference signal once at the candidate transmission position, and if still not preempting any candidate transmission position in the slave transmission modes when the next candidate transmission position in the master transmission pattern is reached, continues trying to preempt the currently reached candidate transmission position in the master transmission pattern for transmission of the reference signal. In such a manner, the reference signal is always preferentially sent in the preset mater transmission pattern, and only when a certain candidate transmission position in the master transmission pattern is not preempted, is tried to be sent at a subsequent candidate transmission position in a slave transmission mode, so as to ensure a certain sending density.

Of course, the master transmission pattern may also be adaptively modified according to a specific condition in the embodiment of the disclosure. For example, in the above steps, after a candidate transmission position of any slave transmission pattern is preempted, the master and slave transmission patterns may be reset, the any slave transmission pattern is set to be a new master transmission pattern, and the original master transmission pattern is set to be a slave transmission pattern. In such a manner, sending through a candidate transmission position in the newly set master transmission pattern will be tried subsequently.

It can be seen that if the abovementioned Measurement Gap configuration manner 1-2 is adopted, when the sending density is adaptively regulated, the embodiment 3-1 may be regulated into an embodiment 3-1A, and the embodiment 3-2 may be regulated into an embodiment 3-2A. Description will be made below.

Embodiment 3-1A: the abovementioned Measurement Gap configuration manner 1-2 may be combined with the embodiment 3-1 to obtain a master and slave transmission pattern combined adaptive Uband reference signal transmission density regulation solution, that is, the transmission pattern corresponding to the default transmission positions is called as the master pattern (its period is equal to the rated transmission period), and the transmission patterns corresponding to the other transmission positions are called as the slave patterns. The master pattern is a fixed and long-term pattern, and the eNB sends the Uband reference signal on the master pattern as much as possible. If the eNB fails in the contention for the Uband channel on the master pattern to obtain a sending occasion, the eNB sequentially sends the Uband reference signal on multiple slave patterns instead. Once obtaining a transmission occasion on a certain slave pattern, the eNB sends the reference signal by virtue of the occasion, and is switched back to the master pattern. Therefore, the slave patterns are temporary and short-term patterns.

In a specific embodiment, multiple sets of transmission patterns are configured in a Discovery Signal Measurement Timing Configuration (DMTC) window, and a length of each transmission position is right equal to 1 sub-frame (1ms). If the size of the DMTC window is M sub-frames and the period is T ms, M sets of transmission patterns may be configured, and each set of transmission pattern consists of a series of periodic candidate transmission positions. Furthermore, the period of each set of transmission pattern is T ms, wherein the length of each candidate transmission position is 1 sub-frame, and each candidate transmission position falls within the DMTC window. Particularly, the transmission pattern including a first sub-frame in the DMTC window is called as the master transmission pattern, and the transmission patterns including other sub-frames in the DMTC window are sequentially called as a first slave transmission pattern, a second slave transmission pattern, ..., an (M-1)th slave transmission pattern. Therefore, the eNB may contend for a channel access occasion in any sub-frame of the DMTC window to try to send a DRS.

Embodiment 3-2A: the abovementioned Measurement Gap configuration manner 1-2 may be combined with the embodiment 3-2 to obtain a multi-pattern rotating adaptive Uband reference signal transmission density regulation solution. That is, each pattern is equal, and the master and slave transmission patterns may be set as desired. For example, if the eNB fails in contention for the Uband channel on a current master pattern to obtain a sending occasion, the eNB sequentially sends the Uband reference signal on multiple other patterns instead. Once obtaining a transmission occasion on a certain pattern, the eNB immediately switches to perform subsequent periodic sending in the pattern. Therefore, the eNB is continuously switched among the multiple patterns according to the channel contention result (see Case4 in Fig. 6 for a specific sending diagram).

The second adaptive regulation principle Opt 1A-2: the expected sending density of the Uband reference signal is regulated on the basis of the RRM measurement result fed back by the UE. The RRM measurement result may be RSRP/RSRQ, and the RRM measurement result may be fed back to the eNB by the UE on the Lband.

In the embodiment of the disclosure, the Uband channel includes multiple predetermined candidate transmission positions for transmitting the reference signal. The operation that the eNB sends the reference signal to the UE for many times on the Uband in Step 12 may specifically include the following steps.

Step 121': the eNB regulates the sending density of the reference signal according to the RRM measurement result fed back by the UE.

Here, regulating the sending density may specifically be executed according to the following manner:
statistics about the number of effective RRM measurement results received in each statistical period is made according to a predetermined statistical period, where the number of the effective measurement results may refer to the number of sub-frames in which Reference Signal Receiving Quality (RSRQ) or Reference Signal Receiving Power (RSRP) of the reference signal is higher than a second preset threshold value;
when the statistical number in a current statistical period is smaller than a preset threshold, the sending density of the reference signal is increased;
when the statistical number in the current statistical period is equal to the preset threshold, the sending density of the reference signal is kept unchanged; and
when the statistical number in the current statistical period is larger than the preset threshold, the sending density of the reference signal is decreased.

Step 122': the eNB determines the candidate transmission position for sending the reference signal according to the regulated sending density of the reference signal, and sends the reference signal when the candidate transmission position is idle.

It can be seen that the eNB regulates the expected sending density of the Uband reference signal according to RRM measurement information (such as the RSRP/RSRQ) fed back by the UE under the Opt 1A-2 principle. For example, the reference signal is the Uband reference signal.

At first, only after actually receiving the Uband reference signal sent by the eNB, the UE may execute corresponding RRM measurement, thereby feeding back the measurement information including the RSRP and/or RSRQ to the eNB.

To be different from the Lband, the eNB may fail to send the Uband reference signal at a certain expected candidate transmission position (Measurement Gap) because of not successfully contending for a channel resource, so that the UE may not implement RRM measurement at the corresponding Measurement Gap, and may further not feed back any RRM measurement result.

From the viewpoint of application, a main design purpose of a reference signal is to facilitate execution of reliable RRM measurement. Therefore, it is very reasonable that the eNB adaptively regulates the sending density of the Uband reference signal according to quality of the RRM measurement result fed back by the UE.

A regulation strategy is as follows: the eNB defines the concept of effective RRM feedback at first. For example, when the RSRQ fed back by the UE is higher than a certain threshold, it is considered that the RRM measurement result fed back by the UE is effective. During a certain Measurement Gap, if the eNB does not successfully send the Uband reference signal, the UE may not provide any RRM feedback; or, although the eNB successfully sends the Uband reference signal, because of a strong interference source (such as a hidden node) existing in the vicinity of the UE, the UE may make a misjudgment about existence of the Uband reference signal and consider that the Uband reference signal does not exist, and then may not provide any RRM feedback; or, although the UE provides an RRM feedback, its corresponding RSRQ value is too low (which indicates that interference is particularly strong and the RRM measurement result is inaccurate). The eNB considers that none of the three scenarios is consistent with the definition of effective RRM feedback.

It should be understood that the definition of effective RRM feedback may be based on a Uband reference signal level. For example, whether an RRM measurement result fed back by the UE is an effective RRM measurement result or not is judged directly by judging whether the signal strength/signal quality of RRM measurement result meets a preset condition or not.

The definition of effective RRM feedback may also be based on a sub-frame level. The embodiment preferably adopts this definition. For example, in Figs. 4a-4d, if a fed back RSRQ value of each sub-frame is higher than a certain specific threshold, it is determined that Case1, Case2 and Case3b feed back an effective RRM feedback unit of 5 sub-frames, i.e. 5 effective RRM measurement results, and that Case3a feeds back an effective RRM feedback unit of 3 sub-frames, i.e. 3 effective RRM measurement results.

The eNB continues defining an overall RRM measurement quality index (i.e. the number of the effective RRM measurement results received in each statistical period), for example, designs the overall RRM measurement quality index to be an accumulated effective RRM feedback unit number in a certain observation window, and requires the overall RRM measurement quality index to be higher than a certain set threshold. For example, an accumulated effective RRM feedback unit number in a statistical period of 160ms is required to be greater than or equal to 5.

The eNB adaptively regulates the expected sending density of the Uband reference signal under a constraint of the abovementioned criterion, and if the overall RRM measurement quality index received by the eNB side is less than the set threshold, the sending density of the Uband reference signal is increased, that is, the eNB tries to send the Uband reference signal by contending for the channel at more "possible transmission positions"; and if it is higher than the set threshold, the sending density of the Uband reference signal may be decreased.

As a specific implementation, for increasing or decreasing the sending density, multiple patterns with sending densities may be preset for the candidate transmission positions on the Uband, each pattern has corresponding candidate transmission positions, and has a different density of the candidate transmission positions. For example, when the sending density is required to be increased, the eNB determines a new pattern of which a sending density is higher than that of a current pattern, and tries to preempt a candidate transmission position in the new pattern to send the reference signal. For another example, when the sending density is required to be decreased, the eNB determines another new pattern of which a sending density is less than the current pattern, and tries to preempt a candidate transmission position in the other new pattern to send the reference signal. Of course, if the sending density is not required to be regulated, the current pattern is kept unchanged.

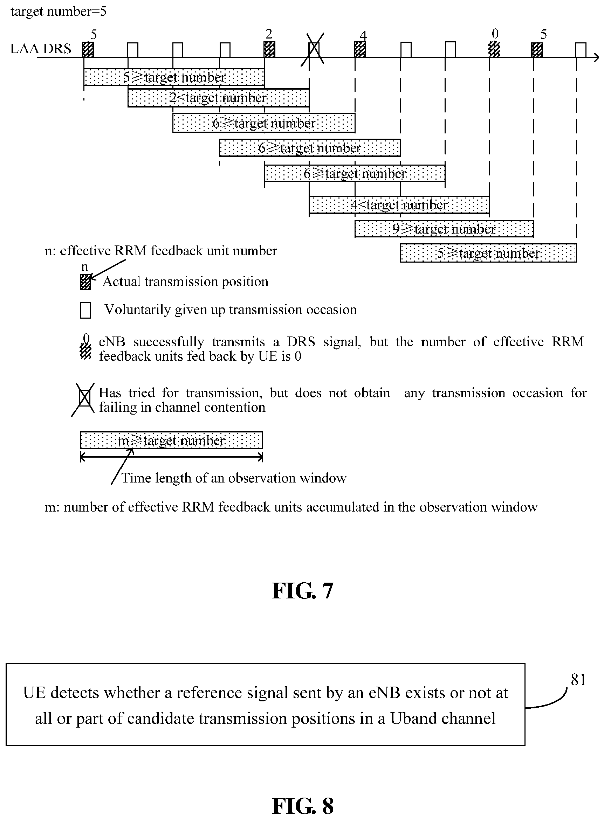

Fig. 7 shows a schematic diagram of adaptively regulating a transmission density of a Uband reference signal on the basis of an RRM measurement result fed back by UE, where the set threshold is that effective RRM measurement results of 5 sub-frames are received in a statistical period. When only two effective measurement results are received in a certain statistical period, the eNB increases the sending density of the reference signal. When effective measurement results of 6 sub-frames are received within a subsequent statistical period, the eNB decreases the sending density, and when effective measurement results of 4 sub-frames are received within a subsequent statistical period, the eNB increases the sending density again. In such a manner, regulation of the sending density is implemented.

How the eNB sends the reference signal (the reference signal) is described above. Correspondingly, the UE side needs to detect the reference signal sent by the eNB. For efficiency improvement and implementation complexity reduction of reference signal detection of the UE, in the embodiment, the eNB may send first signaling to the UE on the Lband, where the first signaling indicates the candidate transmission position at which the eNB is about to try to send the reference signal; or, the eNB sends second signaling to the UE on the Lband, where the second signaling indicates the candidate transmission position at which the eNB has successfully sent the reference signal. In such a manner, the eNB prompts the UE of the position at which the reference signal is about to be sent or has been sent, so as to facilitate measurement and feedback of the UE. Specific processing on the UE side refers to detailed descriptions made hereinafter.

### The UE side

How the UE side performs RRM measurement on the reference signal sent by the eNB in the embodiment of the disclosure will be elaborated below.

Referring to Fig. 8, an embodiment of the disclosure provides a multiple transmission occasion-based Uband reference signal receiving method. A Uband channel includes multiple predetermined candidate transmission positions for transmitting a reference signal. Specifically, each reference signal sending period on the Uband includes the multiple predetermined candidate transmission positions. As shown in Fig. 8, the method includes:
Step 81: UE detects whether the reference signal sent by an eNB exists or not at all or part of the candidate transmission positions on the Uband channel, where the reference signal may be designed with reference to a DRS defined in the 3GPP R12.

In the embodiment of the disclosure, the Uband channel includes the multiple predetermined candidate transmission positions for transmitting the reference signal. Here, the operation of detecting whether the reference signal sent by the eNB exists or not is specifically implemented as follows: the UE detects whether the reference signal sent by the eNB exists or not at the candidate transmission positions on the Uband channel, i.e. blind detection.

In the embodiment of the disclosure, a transmission occasion for the reference signal in each reference signal sending period is expanded to implement multiple transmission of the reference signal, so that the UE may obtain multiple possible receiving opportunities in each reference signal sending period, and receiving reliability of the reference signal is ensured.

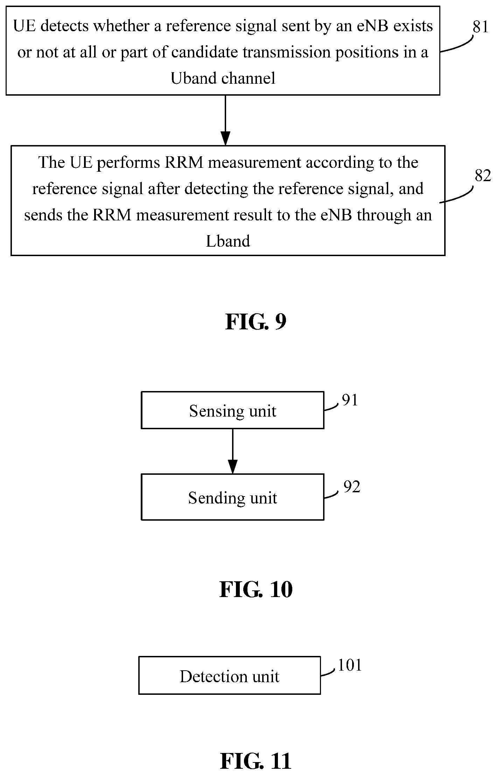

Referring to Fig. 9, an embodiment of the disclosure further provides another multiple transmission occasion-based Uband reference signal receiving method. As shown in Fig. 9, after Step 81, the method further includes:
Step 82: the UE performs RRM measurement according to the reference signal after detecting the reference signal, and sends the RRM measurement result to the eNB through an Lband.

In an actual running process, if the eNB does not tell the UE whether the Uband reference signal exists in a specific Measurement Gap through signaling, the UE may try to receive the Uband reference signal within all configured Measurement Gaps. That is, the UE tries to sense the Uband reference signal at all the candidate transmission positions. If the Uband reference signal is detected, the RRM measurement result, such as a measured RSRP/RSRQ value, is fed back on the Lband. Such a detection solution is called as a "UE blind detection mechanism".

Particularly, if the UE may learn about a Uband reference signal transmission rule of the eNB, the UE may predict positions where a Uband reference signal may be sent next time according to historical information, thereby selectively sensing the Uband reference signal at part of the "possible transmission positions", so as to remarkably reduce channel sensation overhead of the UE.

For different reference signal sending manners of the eNB mentioned above, the UE adopts corresponding detection manners in Step 82, which will be described respectively.

### Corresponding to the abovementioned embodiment 3-1

In the reference signal sending manner for the eNB mentioned in the embodiment 3-1 above, each of gaps between adjacent candidate transmission positions in the multiple candidate transmission positions on the Uband is equal to a first period, the multiple candidate transmission positions include multiple default transmission positions, each of gaps between adjacent default transmission positions is equal to a second period, and the second period is longer than the first period. The eNB sends the reference signal through a default transmission position when preempting the default transmission position, and when not preempting any default transmission position, preempts any nondefault transmission position before a next default transmission position to send the reference signal.

At this time, in Step 81, the operation that the UE detects whether the reference signal sent by the eNB exists or not at the candidate transmission positions on the Uband includes that:
the UE detects whether the reference signal sent by the eNB exists or not at the default transmission positions;
if the reference signal is detected at a current default transmission position, when the next default transmission position is reached, the UE detects the reference signal at the default transmission position; and
if the reference signal is not detected at the current default transmission position, the UE continues to detect the reference signal at a nondefault transmission position after the current default transmission position, and after the reference signal is detected at any nondefault transmission position, the UE returns to execute the step of detecting whether the reference signal sent by the eNB exists or not at the default transmission positions.

### Corresponding to the abovementioned embodiment 3-2

In the reference signal sending manner of the eNB mentioned in the embodiment 3-2, each of gaps between adjacent candidate transmission positions in the multiple candidate transmission positions on the Uband is equal to the first period, the multiple candidate transmission positions include multiple default transmission positions, each of gaps between adjacent default transmission positions is equal to the second period, and the second period is longer than the first period. The eNB sends the reference signal through a default transmission position when being capable of preempting the default transmission position, preempts any nondefault transmission position before a next default transmission position to send the reference signal when not preempting any default transmission position, and after preempting the any nondefault transmission position, resets the default transmission positions, wherein the transmission positions at gaps which are integer multiples of the second period with the any nondefault transmission position after the nondefault transmission position are set to be the default transmission positions.

At this time, in Step 81, the operation that the UE detects whether the reference sent by the eNB exists or not at the candidate transmission positions on the Uband includes that:
the UE detects whether the reference signal sent by the eNB exists or not at the default detection positions;
if the reference signal is detected at a current default transmission position, when the next default transmission position is reached, the UE detects the reference signal at the default transmission position; and
if the reference signal is not detected at the current default transmission position, the UE continues to detect the reference signal at a nondefault transmission position after the current default transmission position, if the reference signal is detected at any nondefault transmission position, the transmission positions after the any nondefault transmission position and at gaps which are integer multiples of the second period with the any nondefault transmission position are set to be new default transmission positions, and then the UE returns to execute the step of detecting whether the reference signal sent by the eNB exists or not at the default transmission positions.

### Corresponding to the abovementioned embodiment 3-1A

In the reference signal sending manner of the eNB mentioned in the embodiment 3-1A, the multiple candidate transmission positions on the Uband belong to multiple sets of transmission patterns, each of gaps between adjacent candidate transmission positions in each set of transmission pattern is equal to the second period, and the multiple sets of transmission patterns include a set of master transmission pattern and multiple sets of slave transmission patterns. The eNB sends the reference signal to the UE according to the master transmission pattern when being capable of preempting a candidate transmission position in the master transmission pattern, tries to preempt the candidate transmission positions of each slave transmission pattern if not preempting a current transmission position in the master transmission pattern before a next candidate transmission position in the master transmission pattern is reached, and after preempting a candidate transmission position of any slave transmission pattern, sends the reference signal through the candidate transmission position.

If the eNB selects the manner of the embodiment 3-1A to send the Uband reference signal, the UE may select the following coping strategies: 1) the UE keeps trying to sense the Uband reference signal on the master pattern; 2) if the Uband reference signal is not successfully sensed on the master pattern this time, the UE sequentially tries to sense the Uband reference signal from next appearing slave patterns; and 3) once the Uband reference signal is successfully sensed on a certain slave pattern, the UE continues to sense a Uband reference signal from the next appearing master pattern next time.

At this time, in Step 81, the operation that the UE detects whether the reference sent by the eNB exists or not at the candidate transmission positions on the Uband includes that:
The UE detects whether the reference signal exists or not at the current candidate transmission position of the master transmission pattern;
if the reference signal is detected, when the next candidate transmission position of the master transmission pattern is reached, the UE detects the reference signal at the candidate transmission position; and
if the reference signal is not detected, before the next candidate transmission position in the master transmission pattern is reached, the UE tries to detect the reference signal at the candidate transmission positions of each slave transmission pattern, and after the reference signal is detected, the UE returns to execute the step of detecting whether the reference signal exists or not at the current candidate transmission position of the master transmission pattern.

In a specific embodiment, the multiple sets of transmission patterns are configured in a DMTC window, and the length of each transmission position is right equal to a sub-frame (1ms). If the size of the DMTC window is M sub-frames and a period is T ms, M sets of transmission patterns may be configured, and each set of transmission pattern consists of a series of periodic candidate transmission positions. Furthermore, the period of each set of transmission pattern is T ms, wherein the length of each candidate transmission position is 1 sub-frame, and each candidate transmission position falls within the DMTC window. Particularly, the transmission pattern including a first sub-frame in the DMTC window is called as the master transmission pattern, and the transmission patterns including other sub-frames in the DMTC window are sequentially called as a first slave transmission pattern, a second slave transmission pattern, ..., an (M-1)th slave transmission pattern. Therefore, the eNB may contend for a channel access occasion in any sub-frame of the DMTC window to try to send a DRS. Correspondingly, the UE may suppose that the DRS may appear on any sub-frame in the DMTC window.

### Corresponding to the abovementioned embodiment 3-2A

In the reference signal sending manner of the eNB mentioned in the embodiment 3-2A, the multiple candidate transmission positions on the Uband belong to multiple sets of transmission patterns, each of gaps between adjacent candidate transmission positions in each set of transmission pattern is equal to the second period, and the multiple sets of transmission patterns include a set of master transmission pattern and multiple sets of slave transmission patterns. The eNB sends the reference signal to the UE according to the master transmission pattern when being capable of preempting a candidate transmission position in the master transmission pattern, tries to preempt the candidate transmission positions of each slave transmission pattern if not preempting a current candidate transmission position in the master transmission pattern before a next candidate transmission position in the master transmission pattern is reached, and after preempting a candidate transmission position of any slave transmission pattern, sends the reference signal through the candidate transmission position and sets the any slave transmission pattern to be a new master transmission pattern.

If the eNB selects the manner of the embodiment 3-2A to send the Uband reference signal, the UE may select the following coping strategies: 1) initialization: the UE senses the Uband reference signal in all the patterns in a rolling manner; 2) once the Uband reference signal is successfully sensed in a certain pattern, the pattern is set to be the master pattern, and a next Uband reference signal is still sensed on the master pattern next time; 3) if the Uband reference signal may not be successfully sensed in a default pattern at a certain time, the Uband reference is sequentially sensed in all the other next appearing patterns in the rolling manner, and once the Uband reference signal is successfully sensed in a certain pattern, the pattern is set to be the master pattern, and the next Uband reference signal is still sensed in the master pattern next time; and 4) such operations are repeated.

At this time, in Step 81, the operation that the UE detects whether the reference sent by the eNB exists or not at the candidate transmission positions on the Uband includes that:
The UE detects whether the reference signal exists or not at the current candidate transmission position of the master transmission pattern;
if the reference signal is detected, when the next candidate transmission position of the master transmission pattern is reached, the UE detects the reference signal at the candidate transmission position; and
if the reference signal is not detected, before the next candidate transmission position in the master transmission pattern is reached, the UE tries to detect the reference signal at the candidate transmission positions of each slave transmission pattern, and after the reference signal is detected on any slave transmission pattern, the any slave transmission pattern is set to be a new master transmission pattern, the original master transmission pattern is set to be a slave transmission pattern, and then the UE returns to execute the step of detecting whether the reference signal exists or not at the current transmission position of the master transmission pattern.

In order to reduce overhead required by implementation of reference signal detection of the UE, the eNB may send advanced signaling on the Lband to indicate the expected candidate transmission position for sending the reference signal, or send delayed signaling to indicate the candidate transmission position at which the reference signal has successfully been sent. Therefore, the UE may improve detection accuracy, reduce the detection overhead or pertinently feed back the RRM measurement result to the eNB according to the received signaling.

The eNB may additionally send some signaling to the UE on the Lband to indicate whether the eNB tries in some specific Measurement Gaps or not, and/or, whether the Uband reference signal has been sent or not. There are two types of indication signaling: 1) advanced indication signaling enhancement: the eNB notifies the UB that the ENB will try to send the Uband reference signal in next one or more Measurement Gaps through the signaling before actually trying to send the Uband reference signal; and 2) delayed indication signaling enhancement: the eNB may notify the UE whether the eNB has successfully sent the Uband reference signal in a certain Measurement Gap or not through the signaling after the Measurement Gap.

For example, in the method, the UE may also receive first signaling (advanced indication signaling) sent by the eNB on the Lband, where the first signaling indicates the candidate transmission position at which the eNB is about to try to send the reference signal. Then, in Step 81, the UE may detect whether the reference signal exists or not at the candidate transmission position according to the first signaling when the candidate transmission position at which the eNB is about to try to send the reference signal is reached.

Therefore, when the advanced indication signaling is adopted, the eNB sends the advanced indication signaling on the Lband to notify the UE whether it will try to send the Uband reference signal in the next one or more Measurement Gaps or not before actually trying to send the Uband reference signal. By virtue of the signaling, the eNB may accurately transmit a decision about regulation of an expected sending density of the Uband reference signal to the UE. The UE merely tries to sense the Uband reference signal at the position indicated by the advanced signaling.

For another example, in the method, the UE receives second signaling (delayed indication signaling) sent by the eNB on the Lband, where the second signaling indicates the candidate transmission position at which the eNB has successfully sent the reference signal. Then, in Step 81, the UE determines the candidate transmission position at which the eNB has successfully sent the reference signal according to the second signaling, and merely sends an RRM measurement result at the candidate transmission position to the eNB.

Therefore, when the delayed indication signaling is adopted, the eNB sends the delayed indication signaling on the Lband to notify the UE whether the eNB has successfully sent the Uband reference signal in a certain Measurement Gap or not after the Measurement Gap. The signaling is mainly applied to a hidden node scenario, that is, there is a strong interference source in the vicinity of the UE. It is very hard for the UE to independently judge whether the Uband reference signal exists or not by blind detection, and thus an inappropriate RRM measurement result may be provided, that is, the Uband reference signal may be missed for detection (corresponding to the condition that the Uband reference signal exists but may not be detected by the UE), or a false RRM measurement result may be fed back (corresponding to the condition that the Uband reference signal does not exist but is mistakenly judged to exist by the UE, and a false result is fed back). In a delayed indication signaling enhancement solution, the UE may feed back the RRM measurement result after receiving the delayed indication signaling, that is, the RRM measurement result is fed back only when the delayed signaling indicates that the Uband reference signal actually has been transmitted, to ensure truth and effectiveness of the RRM measurement result which is fed back.

How to send and detect the reference signal in the embodiments of the disclosure is described above from the eNB and UE sides respectively, and specific devices for implementing the abovementioned methods will be further provided below.

Referring to Fig. 10, an embodiment of the disclosure provides a Uband reference signal sending device. The device is applied to an eNB side, and specifically includes:
a sensing unit 91, configured to sense whether a Uband channel is idle or not at all or part of candidate transmission positions, and determine idle candidate transmission positions, where the Uband channel includes multiple predetermined candidate transmission positions for transmitting a reference signal; and
a sending unit 92, configured to select to send the reference signal to UE at all or part of the idle candidate transmission positions according to historical Uband channel contention state information. Here, the reference signal may be designed with reference to a DRS defined in the 3GPP R12.

In the embodiment of the disclosure, the Uband channel includes the multiple predetermined candidate transmission positions for transmitting the reference signal. In the embodiment, the sensing unit is specifically configured to sense whether the Uband channel is idle or not at all the candidate transmission positions; or, select to sense whether the Uband channel is idle or not at part of the candidate transmission positions according to the historical Uband channel contention state information.

The sending unit is further configured to select to send the reference signal to the UE at all or part of the idle candidate transmission positions according to an actual sending density of the reference signal, to make an expected sending density of the reference signal not less than a first preset threshold value, where the reference signal may be sent once at each candidate transmission position.

Optionally, in the device of the embodiment of the disclosure, each of gaps between adjacent candidate transmission positions in the multiple candidate transmission positions is equal to a first period, the multiple candidate transmission positions include multiple default transmission positions, each of gaps between adjacent default transmission positions is equal to a second period, and the second period is longer than or equal to the first period; and
when sending the reference signal to the UE at all or part of the idle candidate transmission positions, if the current default transmission position is idle, the sending unit sends the LAA reference signal to the UE through a current default transmission position; if the current default transmission position is busy, the sending unit tries to preempt any idle candidate transmission position before a next default transmission position, and after preempting a first candidate transmission position, sends the reference signal through the first candidate transmission position.

Optionally, the device of the embodiment of the disclosure further includes:
a first setting unit, configured to, after the sending unit preempts the first candidate transmission position, reset the default transmission positions, wherein the transmission positions at gaps which are integer multiples of the second period with the first candidate transmission position after the first candidate transmission position are set to be the default transmission positions.

Optionally, in the device of the embodiment of the disclosure, the multiple candidate transmission positions belong to N sets of transmission patterns, N is an integer more than or equal to 1, each of gaps between adjacent candidate transmission positions in each set of transmission pattern is equal to the second period, and the multiple sets of transmission patterns include a set of master transmission pattern and multiple sets of slave transmission patterns; and
when sending the reference signal to the UE at all or part of the idle candidate transmission positions, the sending unit tries to preempt a candidate transmission position in the master transmission pattern to send the reference signal to the UE. If a current candidate transmission position in the master transmission pattern is idle, the sending unit sends the reference signal to the UE through the current candidate transmission position; and if the current candidate transmission position in the master transmission pattern is busy, the sending unit tries to preempt an idle candidate transmission position of each slave transmission pattern before a next candidate transmission position in the master transmission pattern is reached, and after a candidate transmission position of any slave transmission pattern is preempted, the sending unit sends the reference signal through the candidate transmission position.

Optionally, the device of the embodiment of the disclosure further includes:
a second setting unit, configured to, after the sending unit preempts a candidate transmission position of any slave transmission pattern, set the any slave transmission pattern to be a new master transmission pattern, and set the original master transmission pattern to be a slave transmission pattern.

In the embodiment of the disclosure, the device further includes:
a receiving unit, configured to receive an RRM measurement result, fed back by the UE, for the reference signal in an Lband; and
the sending unit is further configured to regulate the sending density of the reference signal according to the RRM measurement result fed back by the UE, determine the candidate transmission position for sending the reference signal according to the regulated sending density of the reference signal, and send the reference signal when the candidate transmission position is idle.

Optionally, in the device of the embodiment of the disclosure, when regulating the sending density of the reference signal according to the RRM measurement result fed back by the UE, the sending unit makes statistics about a number of effective RRM measurement results received in each statistical period according to a predetermined statistical period, wherein, when the statistical number in a current statistical period is smaller than a preset threshold, the sending density of the reference signal is increased; when the statistical number in the current statistical period is equal to the preset threshold, the sending density of the reference signal is kept unchanged; and when the statistical number in the current statistical period is larger than the preset threshold, the sending density of the reference signal is decreased.

Optionally, in the device of the embodiment of the disclosure, the number of the effective measurement results refers to the number of sub-frames in which RSRQ and/or RSRP of the reference signal are/is higher than a second preset threshold value.

Optionally, in the device of the embodiment of the disclosure, a time length for which the reference signal is transmitted in a transmission occasion is less than or equal to a time length of the candidate transmission position. When sensing whether a transmission position on the Uband channel is idle or not, the sensing unit starts sensing whether the candidate transmission position is idle or not from a predetermined advance value ahead of a starting sub-frame of the candidate transmission position, or, starts sensing whether the candidate transmission position is idle or not from the predetermined advance value ahead of an intermediate sub-frame of the transmission position.

Optionally, in the device of the embodiment of the disclosure, the sensing unit starts sensing a busy/idle state of the Uband channel at time of T_{B}-T_{advance}, the predetermined advance value T_{advance} ahead, when starting sensing whether the candidate transmission position is idle or not from the predetermined advance value ahead of the starting sub-frame of the candidate transmission position: if it is sensed that a total power level on the Uband channel is kept less than a predetermined threshold within a preset duration, the candidate transmission position is judged to be idle, otherwise the candidate transmission position is judged to be busy, where T_{B} is a time of the starting sub-frame of the candidate transmission position.

Optionally, the sending unit is further configured for an eNB to, when sending the reference signal at an idle candidate transmission position, if a current time does not reach a rated sending time of the starting sub-frame of the reference signal, send a preamble signal to occupy the Uband channel until the rated sending time of the starting sub-frame of the reference signal is reached; and if an ending sub-frame of the reference signal is about to exceed an ending boundary of the idle candidate transmission position, stop sending the reference signal after the ending boundary is reached, or, continuously send the reference signal until the reference signal is completely sent.

Optionally, the device of the embodiment of the disclosure further includes:
a signaling unit, configured to send first signaling to the UE on the Lband, where the first signaling indicates the candidate transmission position at which the eNB is about to try to send the reference signal; or, send, by the eNB, second signaling to the UE on the Lband, where the second signaling indicates the candidate transmission position at which the eNB has successfully sent the reference signal.

Finally, an embodiment of the disclosure further provides a Uband reference signal receiving device at a UE side. As shown in Fig. 11, the device includes:
a detection unit 101, configured to detect whether a reference signal sent by an eNB exists or not at all or part of candidate transmission positions on a Uband channel, wherein the Uband channel includes multiple predetermined candidate transmission positions for transmitting the reference signal. The reference signal may be designed with reference to a DRS defined in the 3GPP R12.

Fig. 12 shows another structure of a Uband reference signal receiving device. Based on Fig. 11, the device is further added with:
a feedback unit 102, configured to, after the reference signal is detected, perform RRM measurement according to the reference signal, and send the RRM measurement result to the eNB through an Lband.

Optionally, in the device of the embodiment of the disclosure, the Uband channel includes the multiple predetermined transmission positions for transmitting the reference signal; each of gaps between adjacent candidate transmission positions in the multiple candidate transmission positions is equal to a first period, the multiple candidate transmission positions include multiple default transmission positions, each of gaps between adjacent default transmission positions is equal to a second period, and the second period is longer than or equal to the first period; moreover, the eNB may send the reference signal through a default transmission position when preempting the default transmission position, and when not preempting any default transmission position, preempt any nondefault candidate transmission position before a next default transmission position to send the reference signal; and
when detecting whether the reference signal sent by the eNB exists or not, the detection unit detects whether the reference signal sent by the eNB exists or not at the default transmission position.

If the reference signal is detected at a current default transmission position, when a next default transmission position is reached, the reference signal is detected at the default transmission position.

If the reference signal is not detected at the current default transmission position, the reference signal is continued to be detected at a nondefault transmission position after the current default transmission position, and after the reference signal is detected at any nondefault transmission position, whether the reference signal sent by the eNB exists or not is continued to be detected at the default transmission positions.

Optionally, in the device of the embodiment of the disclosure, each of gaps between adjacent candidate transmission positions in the multiple candidate transmission positions is equal to a first period, the multiple candidate transmission positions include multiple default transmission positions, each of gaps between adjacent default transmission positions is equal to a second period, and the second period is longer than or equal to the first period; moreover, the eNB may send the reference signal through a default transmission position when being capable of preempting the default transmission position, preempt any nondefault candidate transmission position before a next default transmission position to send the reference signal when not preempting any default transmission position, and after preempting the any nondefault candidate transmission position, reset the default transmission positions, wherein the candidate transmission positions at gaps which are integer multiples of the second period with the any nondefault candidate transmission position after the any nondefault candidate transmission position are set to be the default transmission positions.

When detecting whether the reference signal sent by the eNB exists or not, the detection unit detects whether the reference signal sent by the eNB exists or not at the default detection positions.

If the reference signal is detected at a current default transmission position, when the next default transmission position is reached, the reference signal is detected at the default transmission position.

If the reference signal is not detected at the current default transmission position, the reference signal is continued to be detected at a nondefault transmission position after the current default transmission position. If the reference signal is detected at any nondefault transmission position, after the transmission positions at gaps which are integer multiples of the second period with the any nondefault transmission position after the any nondefault transmission position are set to be new default transmission positions, whether the reference signal sent by the eNB exists or not is continued to be detected at the default transmission positions.

Optionally, in the device of the embodiment of the disclosure, the multiple candidate transmission positions belong to N sets of transmission patterns, N is an integer greater than or equal to 1, each of gaps between adjacent candidate transmission positions in each set of transmission pattern is equal to the second period, and the multiple sets of transmission patterns include a set of master transmission pattern and multiple sets of slave transmission patterns; the eNB may send the reference signal to the UE according to the master transmission pattern when being capable of preempting a candidate transmission position in the master transmission pattern, try to preempt the candidate transmission positions of each slave transmission pattern if not preempting a current transmission position in the master transmission pattern before a next candidate transmission position in the master transmission pattern is reached, and after preempting a candidate transmission position of any slave transmission pattern, send the reference signal through the candidate transmission position.

When detecting whether the reference signal sent by the eNB exists or not, the detection unit detects whether the reference signal exists or not at the current candidate transmission position of the master transmission pattern.

If the reference signal is detected, when the next candidate transmission position of the master transmission pattern is reached, the reference signal is detected at the candidate transmission position.

If the reference signal is not detected, before the next candidate transmission position in the master transmission pattern is reached, the reference signal is tried to be detected at the candidate transmission positions of each slave transmission pattern, and after the reference signal is detected, whether the reference signal exists or not is continued to be detected at the candidate transmission position of the master transmission pattern.

Optionally, in the device of the embodiment of the disclosure, the multiple candidate transmission positions belong to N sets of transmission patterns, N is an integer greater than or equal to 1, each of gaps between adjacent candidate transmission positions in each set of transmission pattern is equal to the second period, and the multiple sets of transmission patterns include a set of master transmission pattern and multiple sets of slave transmission patterns; the eNB may send the LAA reference signal to the UE according to the master transmission pattern when being capable of preempting a candidate transmission position in the master transmission pattern, try to preempt the candidate transmission positions of each slave transmission pattern if not preempting a current candidate transmission position in the master transmission pattern before a next transmission position in the master transmission pattern is reached, and after preempting a candidate transmission position of any slave transmission pattern, send the LAA reference signal through the candidate transmission position and set the any slave transmission pattern to be a new master transmission pattern.

When detecting whether the reference signal sent by the eNB exists or not, the detection unit detects whether the reference signal exists or not at the current candidate transmission position of the master transmission pattern.

If the reference signal is detected, when the next candidate transmission position of the master transmission pattern is reached, the reference signal is detected at the candidate transmission position.

If the reference signal is not detected, before the next candidate transmission position in the master transmission pattern is reached, the reference signal is tried to be detected at the candidate transmission positions of each slave transmission pattern, and after the reference signal is detected on any slave transmission pattern, the any slave transmission pattern is set to be a new master transmission pattern, the original master transmission pattern is set to be a slave transmission pattern, and then whether the reference signal exists or not is continued to be detected at the current transmission position of the master transmission pattern.

Optionally, the device of the embodiment of the disclosure further includes:
a first receiving unit, configured to receive first signaling sent by the eNB on the Lband, where the first signaling indicates the candidate transmission position at which the eNB is about to try to send the reference signal; and
when detecting whether the reference signal sent by the eNB exists or not at the transmission positions on the Uband channel, the detection unit detects whether the reference signal exists or not at the candidate transmission position according to the first signaling when the candidate transmission position at which the eNB is about to try to send the reference signal is reached.

Optionally, the device of the embodiment of the disclosure further includes:
a second receiving unit, configured to receive second signaling sent by the eNB on the Lband, where the second signaling indicates the candidate transmission position at which the eNB has successfully sent the reference signal; and
the feedback unit is specifically configured to determine the candidate transmission position at which the eNB has successfully sent the reference signal according to the second signaling, and send the RRM measurement result merely at the candidate transmission position to the eNB.

From the above, the embodiments of the disclosure propose multiple solutions for a challenge of a Uband LBT mechanism for an R12 reference signal transmission pattern, including the solution that the eNB side adaptively regulates the actual transmission density of the Uband reference signal according to the channel contention state, some signaling enhancement mechanisms on the UE side and the like, to ensure reliable RRM measurement performance.

## Claims

1. A multiple transmission occasion-based Unlicensed Band, Uband, reference signal sending method, the method comprising:
sensing (11), by an Evolved Node B, eNB, whether the Uband channel is idle or not at all or part of candidate transmission positions, and determining idle candidate transmission positions; and
selecting to send (12), by the eNB, a reference signal to a User Equipment, UE, at all or part of the idle candidate transmission positions on the Uband channel according to historical Uband channel contention state information, wherein the historical Uband channel contention state information reflects a Uband channel contention condition, said condition being an actual Uband reference signal sending density, wherein the eNB configures and transmits all possible transmission opportunities for the reference signal as Measurement gaps of the UE and the UE being expected to receive the Uband reference signal on configured Measurement Gaps, and sending, by the eNB, the reference signal to the UE through part or all of the idle candidate transmission positions on the Uband channel selected according to the historical Uband channel contention state information,
wherein the actual Uband reference signal sending density is represented by a ratio of a number of sending times of the reference signal in a certain statistical period to a time length of the statistical period;
wherein the Uband channel comprises multiple predetermined candidate transmission positions for transmitting the reference signal and each candidate transmission position is a transmission occasion for the reference signal, wherein multiple sets of measurement gaps transmission patterns are configured and signaled by the eNB to the UE in a discovery signals measurement timing configuration, DMTC, window, wherein each set in the multiple sets of transmission patterns consists of the multiple predetermined candidate transmission positions, and each of the multiple predetermined candidate transmission positions falls within the DMTC window.

2. The method according to claim 1, wherein the historical Uband channel contention state information comprises an actual sending density of the reference signal, wherein a time length for which the reference signal is transmitted in a transmission occasion is less than or equal to a time length of the candidate transmission position; and
wherein the sensing whether the Uband channel is idle or not at a candidate transmission position comprises:
starting sensing whether the candidate transmission position is idle or not from a predetermined advance value ahead of a starting sub-frame of the candidate transmission position, or,
starting sensing whether the candidate transmission position is idle or not from the predetermined advance value ahead of an intermediate sub-frame of the transmission position.

3. The method according to claim 2, wherein the starting sensing whether the candidate transmission position is idle or not from the predetermined advance value ahead of the starting sub-frame of the transmission position comprises:
assuming that a time of the starting sub-frame of the candidate transmission position is T_{B}, starting sensing, by the eNB, a busy or idle state of the Uband channel at time of T_{B}-T_{advance}, wherein the T_{advance} is the predetermined advance value;
if it is sensed that a total power level on the Uband channel is kept less than a predetermined threshold within a preset duration, judging that the candidate transmission position is idle, otherwise judging that the candidate transmission position is busy.

4. The method according to claim 1, wherein the selecting to send the reference signal at all or part of the idle candidate transmission positions according to the historical Uband channel contention state information comprises:
selecting to send, by the eNB, the reference signal to the UE at all or part of the idle candidate transmission positions according to an actual sending density of the reference signal, to make an expected sending density of the reference signal not less than a first preset threshold value;
wherein the multiple candidate transmission positions belong to N sets of transmission patterns, N is an integer greater than or equal to 1, each of gaps between adjacent candidate transmission positions in each set of transmission patterns is equal to a second period, and the multiple sets of transmission patterns comprise a set of master transmission pattern and multiple sets of slave transmission patterns, wherein the master transmission pattern is a transmission pattern which includes a first subframe in the DMTC window, and the slave transmission pattern is a transmission pattern which includes other sub-frames in the DMTC window; and
wherein the selecting to send the reference signal to the UE at all or part of the idle candidate transmission positions according to the actual sending density of the reference signal comprises:
trying to preempt a candidate transmission position in the master transmission pattern to send the reference signal to the UE,
if a current candidate transmission position in the master transmission pattern is idle, sending the reference signal to the UE through the current candidate transmission position; or if the current candidate transmission position in the master transmission pattern is busy, trying to preempt an idle candidate transmission position of each slave transmission pattern before a next candidate transmission position in the master transmission pattern is reached, and sending, after preempting a candidate transmission position of any slave transmission pattern, the reference signal through the candidate transmission position.

5. A multiple transmission occasion-based Unlicensed Band, Uband, reference signal receiving method, the method comprising:
detecting (81), by a User Equipment, UE, whether a reference signal sent by an Evolved Node B, eNB, exists or not at all or part of candidate transmission positions on a Uband channel, wherein the UE receives from the eNB all possible transmission opportunities for the reference signal configured by the eNB as measurement gaps of the UE, wherein the UE is expected to receive the Uband reference signal on the configured Measurement Gaps, further wherein the Uband channel comprises multiple predetermined candidate transmission positions for transmitting the reference signal and each candidate transmission position is a transmission occasion for the reference signal, wherein multiple sets of measurement gaps transmission patterns are configured and received by the UE from the eNB in a discovery signals measurement timing configuration, DMTC, window, wherein each set in the multiple sets of transmission patterns consists of the multiple predetermined candidate transmission positions, and each of the multiple predetermined candidate transmission positions falls within the DMTC window.

6. The method according to claim 5, further comprising:
performing (82), by the UE, a Radio Resource Management, RRM, measurement according to the reference signal after detecting the reference signal, and sending the RRM measurement result to the eNB through a Licensed Band, Lband.

7. The method according to claim 5, wherein the multiple candidate transmission positions belong to N sets of transmission patterns, N is an integer greater than or equal to 1, each of gaps between adjacent candidate transmission positions in each set of transmission pattern is equal to a second period, and the multiple sets of transmission patterns comprise a set of master transmission pattern and multiple sets of slave transmission patterns, wherein the master transmission pattern is the transmission pattern which includes a first sub-frame in the DMTC window, and the slave transmission pattern is the transmission pattern which includes other sub-frames in the DMTC window;
when the UE detects whether the reference signal sent by the eNB exists or not, the UE detects whether the reference signal exists or not at a current candidate transmission position of the master transmission pattern;
if the reference signal is detected, when a next candidate transmission position of the master transmission pattern is reached, the UE detects the reference signal at the candidate transmission position; and
if the reference signal is not detected, before the next candidate transmission position in the master transmission pattern is reached, the UE tries to detect the reference signal at the candidate transmission positions of each slave transmission pattern, and after the reference signal is detected, the UE returns to execute the step of detecting whether the reference signal exists or not at the current candidate transmission position of the master transmission pattern.

8. A multiple transmission occasion-based Unlicensed Band, Uband, reference signal Evolved Node B, eNB, comprising:
a sensing unit (91), configured to sense whether a Uband channel is idle or not at all or part of candidate transmission positions, and determine idle candidate transmission positions; and
a sending unit (92), configured to select to send a reference signal to a User Equipment, UE, at all or part of idle candidate transmission positions on the Uband channel, according to historical Uband channel contention state information, wherein the historical Uband channel contention state information reflects a Uband channel contention condition, said condition being an actual Uband reference signal sending density, wherein the sending unit (92) is configured to configure and transmit all possible transmission opportunities for the reference signal as measurement gaps of the UE and the UE being expected to receive the Uband reference signal on configured Measurement Gaps, the sending unit (92) being further configured to send the reference signal to the UE through part or all of the idle candidate transmission positions on the Uband channel selected according to the historical Uband channel contention state information,
wherein the actual Uband reference signal sending density is represented by a ratio of a number of sending times of the reference signal in a certain statistical period to a time length of the statistical period;
further wherein the Uband channel comprises multiple predetermined candidate transmission positions for transmitting the reference signal, and each candidate transmission position is a transmission occasion for the reference signal, wherein multiple sets of measurement gaps transmission patterns are configured and signaled by the eNB to the UE in a discovery signals measurement timing configuration, DMTC, window, wherein each set in the multiple sets of transmission patterns consists of the multiple predetermined candidate transmission positions, and each of the multiple predetermined candidate transmission positions falls within the DMTC window.

9. The eNB according to claim 8, wherein the historical Uband channel contention state information comprises an actual sending density of the reference signal, wherein a time length for which the reference signal is transmitted in a transmission occasion is less than or equal to a time length of the candidate transmission position; and
when sensing whether a transmission position on the Uband channel is idle or not, the sensing unit is configured to start sensing whether the candidate transmission position is idle or not from a predetermined advance value ahead of a starting sub-frame of the candidate transmission position, or, is configured to start sensing whether the candidate transmission position is idle or not from the predetermined advance value ahead of an intermediate sub-frame of the transmission position.

10. The eNB according to claim 9, wherein the sensing unit is configured to start sensing a busy/idle state of the Uband channel at time of T_{B}-T_{advance}, wherein the T_{advance} is the predetermined advance value, when starting sensing whether the candidate transmission position is idle or not the predetermined advance value ahead of the starting sub-frame of the candidate transmission position: if it is sensed that a total power level on the Uband channel is kept less than a predetermined threshold within a preset duration, the eNB is configured to judge the candidate transmission position to be idle, otherwise the eNB is configured to judge the candidate transmission position to be busy, wherein T_{B} is a time of the starting sub-frame of the candidate transmission position.

11. A multiple transmission occasion-based Unlicensed Band, Uband, reference signal User Equipment, UE, comprising:
a detection unit (101), configured to detect whether a reference signal sent by an Evolved Node B, eNB, exists or not at all or part of candidate transmission positions on a Uband channel, wherein the detection unit (101) is configured to receive from the eNB all possible transmission opportunities for the reference signal configured by the eNB as measurement gaps of the UE, wherein the UE is expected to receive the Uband reference signal on the configured Measurement Gaps further wherein the Uband channel comprises multiple predetermined candidate transmission positions for transmitting the reference signal, and each candidate transmission position is a transmission occasion for the reference signal, wherein multiple sets of measurement gaps transmission patterns are configured by the eNB and the UE is configured to receive in a discovery signals measurement timing configuration, DMTC, window, wherein each set in the multiple sets of transmission patterns consists of the multiple predetermined candidate transmission positions, and each of the multiple predetermined candidate transmission positions falls within the DMTC window.

12. The UE according to claim 11, further comprising:
a feedback unit (102), configured to, after the reference signal is detected, perform Radio Resource Management, RRM, measurement according to the reference signal, and send the RRM measurement result to the eNB through a Licensed Band, Lband.

13. The UE according to claim 11, wherein the multiple candidate transmission positions belong to N sets of transmission patterns, N is an integer greater than or equal to 1, each of gaps between adjacent candidate transmission positions in each set of transmission pattern is equal to the second period, and the multiple sets of transmission patterns comprise a set of master transmission pattern and multiple sets of slave transmission patterns, wherein the master transmission pattern is a transmission pattern which includes a first sub-frame in the DMTC window, and the slave transmission pattern is a transmission pattern which includes other sub-frames in the DMTC window; and
when detecting whether the reference signal sent by the eNB exists or not, the detection unit is configured to detect whether the reference signal exists or not at a current candidate transmission position of the master transmission pattern,
if the reference signal is detected, when a next candidate transmission position of the master transmission pattern is reached, the detection unit is configured to detect the reference signal at the candidate transmission position; and
if the reference signal is not detected, before the next candidate transmission position in the master transmission pattern is reached, the detection unit is configured to try to detect the reference signal at the candidate transmission positions of each slave transmission pattern, and after the reference signal is detected, the detection unit is configured to continue to detect whether the reference signal exists or not at the candidate transmission position of the master transmission pattern.

## Patentansprüche

1. Verfahren zum Senden eines auf mehrfachen Übertragungen basierenden Referenzsignals im unlizenzierten Band, Uband, wobei das Verfahren umfasst:
Erfassen (11), durch einen Evolved Node B, eNB, ob der Uband-Kanal bei allen oder einem Teil von Kandidatenübertragungspositionen frei ist oder nicht, und Bestimmen von freien Kandidatenübertragungspositionen; und
Wählen, durch den eNB ein Referenzsignal an eine Benutzerausrüstung, UE, an alle oder einen Teil der freien Kandidatenübertragungspositionen auf dem Uband-Kanal gemäß historischen Uband-Kanalkonfliktzustandsinformationen zu senden (12), wobei die historischen Uband-Kanalkonfliktzustandsinformationen einen Uband-Kanalkonfliktzustand widerspiegeln, wobei der Zustand eine tatsächliche Uband-Referenzsignalsendedichte ist, wobei der eNB alle möglichen Übertragungsanlässe für das Referenzsignal als Messungslücken der UE konfiguriert und überträgt und von der UE erwartet wird, das Uband-Referenzsignal auf konfigurierten Messungslücken zu empfangen, und Senden, durch den eNB, des Referenzsignals an die UE durch einen Teil oder alle der freien Kandidatenübertragungspositionen auf dem Uband-Kanal, die gemäß den historischen Uband-Kanalkonfliktzustandsinformationen ausgewählt wurden,
wobei die tatsächliche Uband-Referenzsignalsendedichte von einem Verhältnis einer Anzahl vom Senden
des Referenzsignals in einer gewissen statistischen Periode zu einer Zeitlänge der statistischen Periode dargestellt wird;
wobei der Uband-Kanal mehrere vorgegebene Kandidatenübertragungspositionen zum Übertragen des Referenzsignals umfasst und jede Kandidatenübertragungsposition eine Übertragungsanlass für das Referenzsignal ist, wobei mehrere Sätze von Messungslückenübertragungsstrukturen konfiguriert sind und von dem eNB an die UE in einem Aufdeckungssignalmessungszeitablaufskonfigurations-, DMTC, Fenster signalisiert werden, wobei jeder Satz in den mehreren Sätzen von Übertragungsstrukturen aus den mehreren vorgegebenen Kandidatenübertragungspositionen besteht und jede der mehreren vorgegebenen Kandidatenübertragungspositionen in das DMTC-Fenster fällt.

2. Verfahren nach Anspruch 1, wobei die historischen Uband-Kanalkonfliktzustandsinformationen eine tatsächliche Sendedichte des Referenzsignals umfassen, wobei eine Zeitlänge, für die das Referenzsignal in einem Übertragungsanlass übertragen wird, geringer oder gleich einer Zeitlänge der Kandidatenübertragungsposition ist; und
wobei das Erfassen, ob der Uband-Kanal bei einer Kandidatenübertragungsposition frei ist oder nicht, Folgendes umfasst:
Starten vom Erfassen, ob die Kandidatenübertragungsposition frei ist oder nicht, bei einem vorgegebenen Zeitvorlaufswert vor einem Anfangssubframe der Kandidatenübertragungsposition, oder
Starten vom Erfassen, ob die Kandidatenübertragungsposition frei ist oder nicht, bei dem vorgegebenen Zeitvorlaufswert vor einem Zwischensubframe der Übertragungsposition.

3. Verfahren nach Anspruch 2, wobei das Starten vom Erfassen, ob die Kandidatenübertragungsposition frei ist oder nicht, bei dem vorgegebenen Zeitvorlaufswert vor dem Anfangssubframe der Übertragungsposition, Folgendes umfasst:
Annehmen, dass eine Zeit des Anfangssubframes der Kandidatenübertragungsposition TB ist, Starten vom Erfassen, durch den eNB, eines belegten oder freien Zustands des Uband-Kanals zur Zeit T_{B}-T_{advance}, wobei das T_{advance} der vorgegebene Zeitvorlaufswert ist;
falls erfasst wird, dass ein Gesamtleistungsniveau auf dem Uband-Kanal innerhalb einer voreingestellten Dauer geringer als eine vorgegebene Schwelle bleibt, Urteilen, dass die Kandidatenübertragungsposition frei ist, ansonsten Urteilen, dass die Kandidatenübertragungsposition belegt ist.

4. Verfahren nach Anspruch 1, wobei das Auswählen, das Referenzsignal bei allen oder einem Teil der freien Kandidatenübertragungspositionen gemäß den historischen Uband-Kanalkonfliktzustandsinformationen zu senden, Folgendes umfasst:
Auswählen, durch den eNB das Referenzsignal an die UE bei allen oder einem Teil der freien Kandidatenübertragungspositionen gemäß einer tatsächlichen Sendedichte des Referenzsignals zu senden, um eine erwartete Sendedichte des Referenzsignals nicht geringer als einen ersten voreingestellten Schwellenwert sein zu lassen;
wobei die mehreren Kandidatenübertragungspositionen zu N Sätzen von Übertragungsstrukturen gehören, N eine Ganzzahl größer oder gleich 1 ist, jede von Lücken zwischen angrenzenden Kandidatenübertragungspositionen in jedem Satz von Übertragungspositionen gleich einer zweiten Periode ist und die mehreren Sätze von Übertragungsstrukturen einen Satz von Hauptübertragungsstrukturen und mehrere Sätze von Unterübertragungsstrukturen umfassen, wobei die Hauptübertragungsstruktur eine Übertragungsstruktur ist, die ein erstes Subframe in dem DMTC-Fenster beinhaltet und die Unterübertragungsstruktur eine Übertragungsstruktur ist, die andere Subframes in dem DMTC-Fenster beinhaltet; und
wobei das Auswählen, das Referenzsignal bei allen oder einem Teil der freien Kandidatenübertragungspositionen gemäß der tatsächlichen Sendedichte des Referenzsignals an die UE zu senden, Folgendes umfasst:
Versuchen, einer Kandidatenübertragungsposition in der Hauptübertragungsstruktur zuvorzukommen, um das Referenzsignal an die UE zu senden,
falls eine aktuelle Kandidatenübertragungsposition in der Hauptübertragungsstruktur frei ist, Senden des Referenzsignals an die UE durch die aktuelle Kandidatenübertragungsposition; oder falls die aktuelle Kandidatenübertragungsposition in der Hauptübertragungsstruktur belegt ist, Versuchen, einer freien Kandidatenübertragungsposition jeder Unterübertragungsstruktur zuvorzukommen, bevor eine nächste Kandidatenübertragungsposition in der Hauptübertragungsstruktur erreicht wird, und Senden, nachdem einer Kandidatenübertragungsposition jeder Unterübertragungsstruktur zuvorgekommen wird, des Referenzsignals durch die Kandidatenübertragungsposition.

5. Verfahren zum Senden eines auf mehrfachen Übertragungen basierenden Referenzsignals im unlizenzierten Band, Uband, wobei das Verfahren Folgendes umfasst:
Detektieren (81), durch eine Benutzerausrüstung, UE, ob ein Referenzsignal, das von einem Evolved Node B, eNB, bei allen oder einem Teil von Kandidatenübertragungspositionen auf einem Uband-Kanal existiert oder nicht, wobei die UE von dem eNB alle möglichen Übertragungsanlässe für das Referenzsignal empfängt, die von dem eNB als Messungslücken der UE konfiguriert sind,
wobei von der UE erwartet wird, das Uband-Referenzsignal auf den konfigurierten Messungslücken zu empfangen,
wobei weiter der Uband-Kanal mehrere vorgegebene Kandidatenübertragungspositionen zum Übertragen des Referenzsignals umfasst und jede Kandidatenübertragungsposition ein Übertragungsanlass für das Referenzsignal ist, wobei mehrere Sätze von Messungslückenübertragungsstrukturen konfiguriert und durch die UE von dem eNB in einem Aufdeckungssignalmessungszeitablaufskonfigurations-, DMTC, Fenster empfangen werden, wobei jeder Satz in den mehreren Sätzen von Übertragungsstrukturen aus den mehreren vorgegebenen Kandidatenübertragungspositionen besteht und jede der mehreren vorgegebenen Kandidatenübertragungspositionen in das DMTC-Fenster fällt.

6. Verfahren nach Anspruch 5, weiter umfassend:
Durchführen (82), durch die UE, einer Funkressourcenverwaltungs-, RRM, - messung gemäß dem Referenzsignal nach Detektieren des Referenzsignals und Senden des RRM-Messungsergebnisses an den eNB durch ein lizenziertes Band, Lband.

7. Verfahren nach Anspruch 5, wobei die mehreren Kandidatenübertragungspositionen zu N Sätzen von Übertragungsstrukturen gehören, N eine Ganzzahl größer oder gleich 1 ist, jede von Lücken zwischen angrenzenden Kandidatenübertragungspositionen in jedem Satz von Übertragungsstrukturen gleich einer zweiten Periode ist und die mehreren Sätze von Übertragungsstrukturen einen Satz von Hauptübertragungsstrukturen und mehrere Sätze von Unterübertragungsstrukturen umfassen, wobei die Hauptübertragungsstruktur die Übertragungsstruktur ist, die ein erstes Subframe in dem DMTC-Fenster beinhaltet, und die Unterübertragungsstruktur die Übertragungsstruktur ist, die andere Subframes in dem DMTC-Fenster beinhaltet;
wenn die UE detektiert, ob das von dem eNB gesendete Referenzsignal existiert oder nicht, die UE detektiert, ob das Referenzsignal bei einer aktuellen Kandidatenübertragungsposition der Hauptübertragungsstruktur existiert oder nicht;
falls das Referenzsignal detektiert wird, wenn eine nächste Kandidatenübertragungsposition der Hauptübertragungsstruktur erreicht wird, die UE das Referenzsignal bei der Kandidatenübertragungsposition detektiert; und
falls das Referenzsignal nicht detektiert wird, bevor die nächste Kandidatenübertragungsposition in der Hauptübertragungsstruktur erreicht wird, die UE versucht, das Referenzsignal bei den Kandidatenübertragungspositionen jeder Unterübertragungsstruktur zu detektieren, und nachdem das Referenzsignal detektiert wird, die UE dazu zurückkehrt, den Schritt zum Detektieren auszuführen, ob das Referenzsignal bei der aktuellen Kandidatenübertragungsposition der Hauptübertragungsstruktur existiert oder nicht.

8. Evolved Node B, eNB, für ein auf mehrfachen Übertragungen basierendes Referenzsignal im unlizenzierten Band, Uband, umfassend:
eine Erfassungseinheit (91), die dazu konfiguriert ist, zu erfassen, ob ein Uband-Kanal bei allen oder einem Teil von Kandidatenübertragungspositionen frei ist oder nicht, und freie Kandidatenübertragungspositionen zu ermitteln; und
eine Sendeeinheit (92), die dazu konfiguriert ist, auszuwählen, ein Referenzsignal an eine Benutzerausrüstung,
UE, bei allen oder einem Teil von freien Kandidatenübertragungspositionen auf dem Uband-Kanal gemäß historischen Uband-Kanalkonfliktzustandsinformationen zu senden, wobei die historischen Uband-Kanalkonfliktzustandsinformationen einen Uband-Kanalkonfliktzustand widerspiegeln, wobei der Zustand eine tatsächliche Uband-Referenzsignalsendedichte ist, wobei die Sendeeinheit (92) konfiguriert ist, alle möglichen Übertragungsanlässe für das Referenzsignal als Messungslücken der UE zu konfigurieren und zu übertragen, und von der UE erwartet wird, das Uband-Referenzsignal auf konfigurierten Messungslücken zu empfangen, wobei die Sendeeinheit (92) weiter dazu konfiguriert ist, das Referenzsignal durch einen Teil oder alle der freien Kandidatenübertragungspositionen auf dem Uband-Kanal an die UE zu senden, die gemäß den historischen Uband-Kanalkonfliktzustandsinformationen ausgewählt werden,
wobei die tatsächliche Uband-Referenzsignalsendedichte durch ein Verhältnis einer Anzahl vom Senden des Referenzsignals in einer gewissen statistischen Periode zu einer Zeitlänge der statistischen Periode dargestellt wird;
wobei weiter der Uband-Kanal mehrere vorgegebene Kandidatenübertragungspositionen zum Übertragen des Referenzsignals umfasst und jede Kandidatenübertragungsposition ein Übertragungsanlass für das Referenzsignal ist,
wobei mehrere Sätze von Messungslückenübertragungsstrukturen konfiguriert und von dem eNB an die UE in einem Aufdeckungssignalmessungszeitablaufskonfigurations-, DMTC, Fenster signalisiert werden, wobei jeder Satz in den mehreren Sätzen von Übertragungsstrukturen aus den mehreren vorgegebenen Kandidatenübertragungspositionen besteht und jede der mehreren vorgegebenen Kandidatenübertragungspositionen in das DMTC-Fenster fällt.

9. ENB nach Anspruch 8, wobei die historischen Uband-Kanalkonfliktzustandsinformationen eine tatsächliche Sendedichte des Referenzsignals umfassen, wobei eine Zeitlänge, für die das Referenzsignal in einem Übertragungsanlass übertragen wird, geringer als oder gleich einer Zeitlänge der Kandidatenübertragungsposition ist; und
wenn erfasst wird, ob eine Übertragungsposition auf dem Uband-Kanal frei ist oder nicht, die Erfassungseinheit konfiguriert ist, Erfassen, ob die Kandidatenübertragungsposition frei ist oder nicht, bei einem vorgegebenen Zeitvorlaufswert vor einem Anfangssubframe der Kandidatenübertragungsposition zu starten, oder konfiguriert ist, Erfassen, ob die Kandidatenübertragungsposition frei ist oder nicht, bei dem vorgegebenen Zeitvorlaufswert vor einem Zwischensubframe der Kandidatenübertragungsposition zu starten.

10. ENB nach Anspruch 9, wobei die Erfassungseinheit konfiguriert ist, Erfassen eines belegten/freien Zustands des Uband-Kanals zum Zeitpunkt TB-Tadvance zu starten, wobei das Tadvance der vorgegebene Zeitvorlaufswert ist, wenn Erfassen, ob die Kandidatenübertragungsposition frei ist oder nicht, bei dem vorgegebenen Zeitvorlaufswert vor einem Anfangssubframe der Kandidatenübertragungsposition gestartet wird: falls erfasst wird, dass ein Gesamtleistungspegel auf dem Uband-Kanal in einer voreingestellten Dauer niedriger als eine vorgegebene Schwelle gehalten wird, der eNB konfiguriert ist, die Kandidatenübertragungsposition als frei zu beurteilen, ansonsten der eNB konfiguriert ist, die Kandidatenübertragungsposition als belegt zu beurteilen, wobei T_{B} ein Zeitpunkt des Anfangssubframes der Kandidatenübertragungsposition ist.

11. Benutzerausrüstung, UE, für ein auf mehrfachen Übertragungen basierendes Referenzsignals im unlizenzierten Band, Uband, umfassend:
eine Detektionseinheit (101), die konfiguriert ist zu detektieren, ob ein von einem Evolved Node B, eNB, gesendetes Signal bei allen oder einem Teil von Kandidatenübertragungspositionen auf einem Uband-Kanal existiert oder nicht, wobei die Detektionseinheit (101) konfiguriert ist, von dem eNB alle möglichen Übertragungsanlässe für das Referenzsignal zu empfangen, die von dem eNB als Messungslücken der UE konfiguriert sind,
wobei von der UE erwartet wird, das Uband-Referenzsignal auf den konfigurierten Messungslücken zu empfangen, wobei weiter der Uband-Kanal mehrere vorgegebene Kandidatenübertragungspositionen zum Übertragen des Referenzsignals umfasst und jede Kandidatenübertragungsposition ein Übertragungsanlass für das Referenzsignal ist, wobei mehrere Sätze von Messungslückenübertragungsstrukturen von dem eNB konfiguriert werden und die UE konfiguriert ist, in einem Aufdeckungssignalmessungszeitablaufskonfigurations-, DMTC, Fenster zu empfangen, wobei jeder Satz in den mehreren Sätzen von Übertragungsstrukturen aus den mehreren vorgegebenen Kandidatenübertragungspositionen besteht und jede der mehreren vorgegebenen Kandidatenübertragungspositionen in das DMTC-Fenster fällt.

12. UE nach Anspruch 11, weiter umfassend:
eine Rückkopplungseinheit (102), die konfiguriert ist, nachdem das Referenzsignal detektiert wird, Funkressourcenverwaltungs-, RRM, -messung gemäß dem Referenzsignal durchzuführen und das RRM-Messungsergebnis an den eNB durch ein lizenziertes Band, Lband, zu senden.

13. UE nach Anspruch 11, wobei die mehreren Kandidatenübertragungspositionen zu N Sätzen von Übertragungsstrukturen gehören, N eine Ganzzahl größer oder gleich 1 ist, jede von Lücken zwischen angrenzenden Kandidatenübertragungspositionen in jedem Satz von Übertragungsstrukturen gleich der zweiten Periode ist und die mehreren Sätze von Übertragungsstrukturen einen Satz von Hauptübertragungsstrukturen und mehrere Sätze von Unterübertragungsstrukturen umfassen, wobei die Hauptübertragungsstruktur eine Übertragungsstruktur ist, die ein erstes Subframe in dem DMTC-Fenster beinhaltet, und die Unterübertragungsstruktur eine Übertragungsstruktur ist, die andere Subframes in dem DMTC-Fenster beinhaltet; und
wenn detektiert wird, ob das von dem eNB gesendete Referenzsignal existiert oder nicht, die
Detektionseinheit konfiguriert ist zu detektieren, ob das Referenzsignal bei einer aktuellen Kandidatenübertragungsposition der Hauptübertragungsstruktur existiert oder nicht,
falls das Referenzsignal detektiert wird, wenn eine nächste Kandidatenübertragungsposition der Hauptübertragungsstruktur erreicht wird, die Detektionseinheit konfiguriert ist, das Referenzsignal bei der Kandidatenübertragungsposition zu detektieren; und
falls das Referenzsignal nicht detektiert wird, bevor die nächste Kandidatenübertragungsposition in der Hauptübertragungsstruktur erreicht wird, die Detektionseinheit konfiguriert ist zu versuchen, das Referenzsignal bei den Kandidatenübertragungspositionen jeder Unterübertragungsstruktur zu detektieren, und nachdem das Referenzsignal detektiert wird, die Detektionseinheit konfiguriert ist, fortzusetzen zu detektieren, ob das Referenzsignal bei der Kandidatenübertragungsposition der Hauptübertragungsstruktur existiert oder nicht.

## Revendications

1. Procédé d'envoi de signal de référence dans de multiples bandes non couvertes par des licences, Uband, sur la base d'occasions de transmission, le procédé comprenant :
la détection (11), par un noeud B évolué, eNB, si le canal Uband est libre ou non ou fait partie de positions de transmission candidates, et la détermination des positions de transmission candidates libres ; et
la sélection pour envoyer, (12), par l'eNB, un signal de référence à un équipement d'utilisateur, UE, dans la totalité ou une partie des positions de transmission candidates libres sur le canal Uband selon des informations d'état de collision de canal Uband historiques, dans lequel les informations d'état de collision de canal Uband historiques reflètent une condition de collision de canal Uband, ladite condition étant une densité d'envoi de signal de référence Uband réelle, dans lequel l'eNB configure et transmet toutes les opportunités de transmission possibles pour le signal de référence en tant qu'intervalles de mesures de l'UE et l'UE étant prévu pour recevoir le signal de référence Uband sur des intervalles de mesure configurés, et l'envoi, par l'eNB, du signal de référence à l'UE par le biais d'une partie ou de la totalité des positions de transmission candidates libres sur le canal Uband sélectionné selon les informations d'état de collision de canal Uband historiques,
dans lequel la densité d'envoi de signal de référence Uband réelle est représentée par un rapport entre un nombre d'heures d'envoi
du signal de référence dans une certaine période statistique sur une durée de la période statistique ;
dans lequel le canal Uband comprend de multiples positions de transmission candidates prédéterminées pour transmettre le signal de référence et chaque position de transmission candidate est une occasion de transmission pour le signal de référence, dans lequel de multiples ensembles de modèles de transmission d'intervalles de mesure sont configurés et signalés par l'eNB à l'UE dans une fenêtre de configuration temporelle de mesure de signaux de découverte, DMTC, dans lequel chaque ensemble dans les multiples ensembles de modèles de transmission est constitué des multiples positions de transmission candidates prédéterminées, et chacune des multiples positions de transmission candidates prédéterminées s'inscrit dans la fenêtre DMTC.

2. Procédé selon la revendication 1, dans lequel les informations d'état de collision de canal Uband historiques comprennent une densité d'envoi réelle du signal de référence, dans lequel une durée pendant laquelle le signal de référence est transmis dans une occasion de transmission est inférieure ou égale à une durée de la position de transmission candidate ; et
dans lequel la détection si le canal Uband est libre ou non dans une position de transmission candidate comprend :
le démarrage d'une détection si la position de transmission candidate est libre ou non à partir d'une valeur d'avancée prédéterminée avant une sous-trame de démarrage de la position de transmission candidate, ou,
le démarrage d'une détection si la position de transmission candidate est libre ou non à partir de la valeur d'avancée prédéterminée avant une sous-trame intermédiaire de la position de transmission.

3. Procédé selon la revendication 2, dans lequel le démarrage de détection si la position de transmission candidate est libre ou non à partir de la valeur d'avancée prédéterminée avant la sous-trame de démarrage de la position de transmission comprend :
la supposition qu'une heure de la sous-trame de démarrage de la position de transmission candidate est TB, le démarrage d'une détection, par l'eNB, d'un état occupé ou libre du canal Uband à une heure de T_{B-Tadvance}, dans lequel la T_{advance} est la valeur d'avancée prédéterminée ;
s'il est détecté qu'un niveau de puissance totale sur le canal Uband est maintenu en dessous d'un seuil prédéterminé au sein d'une durée prédéfinie, l'estimation que la position de transmission candidate est libre, sinon l'estimation que la position de transmission candidate est occupée.

4. Procédé selon la revendication 1, dans lequel la sélection pour envoyer le signal de référence dans la totalité ou une partie des positions de transmission candidates libres selon les informations d'état de collision de canal Uband historiques comprend :
la sélection pour envoyer, par l'eNB, le signal de référence à l'UE dans la totalité ou une partie des positions de transmission candidates libres selon une densité d'envoi réelle du signal de référence, pour rendre une densité d'envoi prévue du signal de référence pas inférieure à une première valeur de seuil prédéfinie ;
dans lequel les multiples positions de transmission candidates appartiennent à N ensembles de modèles de transmission, N est un entier supérieur ou égal à 1, chacun des intervalles entre des positions de transmission candidates adjacentes dans chaque ensemble de modèles de transmission est égal à une seconde période, et les multiples ensembles de modèles de transmission comprennent un ensemble de modèle de transmission maître et de multiples ensembles de modèles de transmission esclaves, dans lequel le modèle de transmission maître est un modèle de transmission qui inclut une première sous-trame dans la fenêtre DMTC, et le modèle de transmission esclave est un modèle de transmission qui inclut d'autres sous-trames dans la fenêtre DMTC ; et
dans lequel la sélection pour envoyer le signal de référence à l'UE dans la totalité ou une partie des positions de transmission candidates libres selon la densité d'envoi réelle du signal de référence comprend :
la tentative d'anticiper une position de transmission candidate dans le modèle de transmission maître pour envoyer le signal de référence à l'UE,
si une position de transmission candidate actuelle dans le modèle de transmission maître est libre, l'envoi du signal de référence à l'UE par le biais de la position de transmission candidate actuelle ; ou si la position de transmission candidate actuelle dans le modèle de transmission maître est occupée, la tentative d'anticiper une position de transmission candidate libre de chaque modèle de transmission esclave avant qu'une position de transmission candidate suivante dans le modèle de transmission maître soit atteinte, et l'envoi, après l'anticipation d'une position de transmission candidate d'un quelconque modèle de transmission esclave, du signal de référence par le biais de la position de transmission candidate.

5. Procédé de réception de signal de référence dans de multiples bandes non couvertes par des licences, Uband, sur la base d'occasions de transmission, le procédé comprenant :
la détection (81), par un équipement d'utilisateur, UE, si un signal de référence envoyé par un noeud B évolué, eNB, existe ou non dans la totalité ou une partie de positions de transmission candidates sur un canal Uband, dans lequel l'UE reçoit en provenance de l'eNB toutes les opportunités de transmission possibles pour le signal de référence configuré par l'eNB en tant qu'intervalles de mesure de l'UE,
dans lequel l'UE est prévu pour recevoir le signal de référence Uband sur les intervalles de mesure configurés,
dans lequel en outre le canal Uband comprend de multiples positions de transmission candidates prédéterminées pour transmettre le signal de référence et chaque position de transmission candidate est une occasion de transmission pour le signal de référence, dans lequel de multiples ensembles de modèles de transmission d'intervalles de mesure sont configurés et reçus par l'UE en provenance de l'eNB dans une fenêtre de configuration temporelle de mesure de signaux de découverte, DMTC, dans lequel chaque ensemble dans les multiples ensembles de modèles de transmission est constitué des multiples positions de transmission candidates prédéterminées, et chacune des multiples positions de transmission candidates prédéterminées fait partie de la fenêtre DMTC.

6. Procédé selon la revendication 5, comprenant en outre :
la réalisation (82), par l'UE, d'une mesure de gestion de ressources radio, RRM, selon le signal de référence après la détection du signal de référence, et l'envoi du résultat de mesure de RRM à l'eNB par le biais d'une bande couverte par une licence, Lband.

7. Procédé selon la revendication 5, dans lequel les multiples positions de transmission candidates appartiennent à N ensembles de modèles de transmission, N est un entier supérieur ou égal à 1, chacun des intervalles entre des positions de transmission candidates adjacentes dans chaque ensemble de modèles de transmission est égal à une seconde période, et les multiples ensembles de modèles de transmission comprennent un ensemble de modèle de transmission maître et de multiples ensembles de modèles de transmission esclaves, dans lequel le modèle de transmission maître est le modèle de transmission qui inclut une première sous-trame dans la fenêtre DMTC, et le modèle de transmission esclave est le modèle de transmission qui inclut d'autres sous-trames dans la fenêtre DMTC ;
lorsque l'UE détecte si le signal de référence envoyé par l'eNB existe ou non, l'UE détecte si le signal de référence existe ou non dans une position de transmission candidate actuelle du modèle de transmission maître ;
si le signal de référence est détecté, lorsqu'une position de transmission candidate suivante du modèle de transmission maître est atteinte, l'UE détecte le signal de référence dans la position de transmission candidate ; et
si le signal de référence n'est pas détecté, avant que la position de transmission candidate suivante dans le modèle de transmission maître soit atteinte, l'UE tente de détecter le signal de référence dans les positions de transmission candidates de chaque modèle de transmission esclave, et après que le signal de référence a été détecté, l'UE retourne à l'exécution de l'étape de détection si le signal de référence existe ou non dans la position de transmission candidate actuelle du modèle de transmission maître.

8. Noeud B évolué, eNB, de signal de référence dans de multiples bandes non couvertes par des licences, Uband, sur la base d'occasions de transmission, comprenant :
une unité de détection (91), configurée pour détecter si un canal Uband est libre ou non ou une partie de positions de transmission candidates, et déterminer des positions de transmission candidates libres ; et
une unité d'envoi (92), configurée pour sélectionner pour envoyer un signal de référence à un équipement d'utilisateur,
UE, ou une partie de positions de transmission candidates libres sur le canal Uband, selon des informations d'état de collision de canal Uband historiques, dans lequel les informations d'état de collision de canal Uband historiques reflètent une condition de collision de canal Uband, ladite condition étant une densité d'envoi de signal de référence Uband réelle, dans lequel l'unité d'envoi (92) est configurée pour configurer et transmettre toutes les opportunités de transmission possibles pour le signal de référence en tant qu'intervalles de mesure de l'UE et l'UE étant prévu pour recevoir le signal de référence Uband sur des intervalles de mesure configurés, l'unité d'envoi (92) étant en outre configurée pour envoyer le signal de référence à l'UE par le biais d'une partie ou de la totalité des positions de transmission candidates sur le canal Uband sélectionné selon les informations d'état de collision de canal Uband historiques,
dans lequel la densité d'envoi de signal de référence Uband réelle est représentée par un rapport d'un nombre d'heures d'envoi du signal de référence dans une certaine période statistique sur une durée de la période statistique ;
dans lequel en outre le canal Uband comprend de multiples positions de transmission candidates prédéterminées pour transmettre le signal de référence, et chaque position de transmission candidate est une occasion de transmission pour le signal de référence,
dans lequel de multiples ensembles de modèles de transmission d'intervalles de mesure sont configurés et signalés par l'eNB à l'UE dans une configuration temporelle de mesure de signaux de découverte, DMTC, dans lequel chaque ensemble dans les multiples ensembles de modèles de transmission est constitué des multiples positions de transmission candidates prédéterminées, et chacune des multiples positions de transmission candidates prédéterminées fait partie de la fenêtre DMTC.

9. eNB selon la revendication 8, dans lequel les informations d'état de collision de canal Uband historiques comprennent une densité d'envoi réelle du signal de référence, dans lequel une durée pendant laquelle le signal de référence est transmis dans une occasion de transmission est inférieure ou égale à une durée de la position de transmission candidate ; et
lors de la détection si une position de transmission sur le canal Uband est libre ou non, l'unité de détection est configurée pour démarrer une détection si la position de transmission candidate est libre ou non à partir d'une valeur d'avancée prédéterminée avant une sous-trame de démarrage de la position de transmission candidate, ou, est configurée pour démarrer une détection si la position de transmission candidate est libre ou non à partir de la valeur d'avancée prédéterminée avant une sous-trame intermédiaire de la position de transmission.

10. eNB selon la revendication 9, dans lequel l'unité de détection est configurée pour démarrer une détection d'un état occupé/libre du canal Uband à une heure de TB-Tadvance, dans lequel la Tadvance est la valeur d'avancée prédéterminée, lors du démarrage d'une détection si la position de transmission candidate est libre ou non la valeur d'avancée prédéterminée avant la sous-trame de démarrage de la position de transmission candidate : s'il est détecté qu'un niveau de puissance totale sur le canal Uband est maintenu inférieur à un seuil prédéterminé au sein d'une durée prédéfinie, l'eNB est configuré pour estimer que la position de transmission candidate est libre, sinon l'eNB est configuré pour estimer que la position de transmission candidate est occupée, dans lequel T_{B} est une heure de la sous-trame de démarrage de la position de transmission candidate.

11. Équipement d'utilisateur, UE, de signal de référence dans de multiples bandes exemptes de licences, Uband, sur la base d'occasions de transmission, comprenant :
une unité de détection (101), configurée pour détecter si un signal de référence envoyé par un noeud B évolué, eNB, existe ou non ou une partie de positions de transmission candidates sur un canal Uband, dans lequel l'unité de détection (101) est configurée pour recevoir en provenance de l'eNB toutes les opportunités de transmission possibles pour le signal de référence configuré par l'eNB en tant qu'intervalles de mesure de l'UE,
dans lequel l'UE est prévu pour recevoir le signal de référence Uband sur les intervalles de mesure configurés dans lequel en outre le canal Uband comprend de multiples positions de transmission candidates prédéteminées pour transmettre le signal de référence, et chaque position de transmission candidate est une occasion de transmission pour le signal de référence, dans lequel de multiples ensembles de modèles de transmission d'intervalles de mesure sont configurés par l'eNB et l'UE est configuré pour recevoir dans une fenêtre de configuration temporelle de mesure de signaux de découverte, DMTC, dans lequel chaque ensemble dans les multiples ensembles de modèles de transmission est constitué des multiples positions de transmission candidates prédéterminées, et chacune des multiples positions de transmission candidates prédéterminées fait partie de la fenêtre DMTC.

12. UE selon la revendication 11, comprenant en outre :
une unité de rétroaction (102), configurée pour, après que le signal de référence a été détecté, réaliser une mesure de gestion de ressources radio, RRM, selon le signal de référence, et envoyer le résultat de mesure de RRM à l'eNB par le biais d'une bande couverte par une licence, Lband.

13. UE selon la revendication 11, dans lequel les multiples positions de transmission candidates appartiennent à N ensembles de modèles de transmission, N est un entier supérieur ou égal à 1, chacun des intervalles entre des positions de transmission candidates adjacentes dans chaque ensemble de modèles de transmission est égal à la seconde période, et les multiples ensembles de modèles de transmission comprennent un ensemble de modèle de transmission maître et de multiples ensembles de modèles de transmission esclaves, dans lequel le modèle de transmission maître est un modèle de transmission qui inclut une première sous-trame dans la fenêtre DMTC, et le modèle de transmission esclave est un modèle de transmission qui inclut d'autres sous-trames dans la fenêtre DMTC ; et
lors de la détection si le signal de référence envoyé par l'eNB existe ou non, l'
unité de détection est configurée pour détecter si le signal de référence existe ou non dans une position de transmission candidate actuelle du modèle de transmission maître,
si le signal de référence est détecté, lorsqu'une position de transmission candidate suivante du modèle de transmission maître est atteinte, l'unité de détection est configurée pour détecter le signal de référence dans la position de transmission candidate ; et
si le signal de référence n'est pas détecté, avant que la position de transmission candidate suivante dans le modèle de transmission maître soit atteinte, l'unité de détection est configurée pour tenter de détecter le signal de référence dans les positions de transmission candidates de chaque modèle de transmission esclave, et après que le signal de référence a été détecté, l'unité de détection est configurée pour continuer à détecter si le signal de référence existe ou non dans la position de transmission candidate du modèle de transmission maître.
